# EUROPÄISCHE PATENTSCHRIFT

(11) **EP 3 744 761 B1**
(45) Veröffentlichungstag und Bekanntmachung des Hinweises auf die Patenterteilung: **30.06.2021**
(21) Anmeldenummer: 19176886.0
(22) Anmeldetag: 28.05.2019
(51) Int. Cl.: C08G 77/46, C08G 77/10, C08G 77/14, B01D 19/04

(54) **SIOC BASIERTE POLYETHERSILOXANE**
SIOC-BASED POLYETHER SILOXANES
POLYETHÉRSILOXANES À BASE DE SIOC

(43) Veröffentlichungstag der Anmeldung: 02.12.2020
(73) Patentinhaber: Evonik Operations GmbH, 45128 Essen (DE)
(72) Erfinder: KNOTT, Wilfried, 4355 Essen (DE); DUDZIK, Horst, 45326 Essen (DE); WINDBIEL, Dagmar, 45289 Essen (DE); FAVRESSE, Philippe, 40880 Ratingen (DE); FIEDEL, Michael, 45239 Essen (DE); BRÖTZMANN, André, 45130 Essen (DE); HENNING, Frauke, 45259 Essen (DE); CASSENS, Jan, 45711 Datteln (DE); FERENZ, Michael, 45147 Essen (DE)
(74) Vertreter: Evonik Patent Association

(56) Entgegenhaltungen:
- EP-A1- 3 467 006
- WO-A1-2009/065644

## Beschreibung

Die Erfindung betrifft SiOC-basierte Polyethersiloxane, Verfahren zu deren Herstellung sowie die Verwendung der SiOC-basierten Polyethersiloxane als Bestandteile in grenzflächenaktiven Substanzen, wie in PU-Schaumstabilisatoren, Entschäumern, Entlüftern, Emulgatoren, Dismulgatoren und Lack- und Verlaufsadditiven.

Die Begriffe "Siloxane" und "Polysiloxane" werden als Synonyme in der vorliegenden Erfindung verwendet.

Der Begriff Entschäumer umfasst im vorliegenden Fall sowohl Produkte als auch Formulierungen, die Schaum verhindern, als auch solche, die Schaum zerstören sowie eine Entlüftung ermöglichen. In der Praxis sind die Übergänge zwischen diesen Produkteigenschaften fließend, so dass hier der gemeinsame Sammelbegriff Entschäumer verwendet wird.

In vielen technischen Verfahren, insbesondere, wenn in wässrigen Medien gearbeitet wird, ist es notwendig, die unerwünschte Bildung von Schaum während der Herstellungs- oder Verarbeitungsprozesse zurückzudrängen oder ganz zu unterbinden, da Schaum bzw. Schaumkronen, die sich bei Rühr- und Dispergiervorgängen oder in den Gebinden während des Abfüllvorganges bilden, die Produktionszeiten verlängern oder aber das Effektivvolumen der Anlage vermindern bzw. deren korrekte Arbeit sogar verhindern können, indem ein Überlaufen der Formulierung aus dem Mischkessel nicht vermieden werden kann und beim Applizieren dieser eine fehlende Farbübertragung unvermeidlich ist.

Dies kann erreicht werden, indem man Entschäumer hinzugibt, die schon bei sehr geringen Einsatzkonzentrationen ab etwa 0,001 Gew.-% in der Lage sind, unerwünschte Schäume zu vermeiden oder zu zerstören und gleichzeitig nach der Applikation der Systeme keine Oberflächenstörungen hervorzurufen und Luftinklusionen im Lack unterdrücken. In der Praxis müssen diese Aspekte mindestens genauso berücksichtigt werden wie eine gute Entschäumung.

Unter Oberflächenstörungen sind für den Anwender unerwünschte Eigenschaften wie beispielsweise Pinholes, Krater, Glanzverlust, Orangenschaleneffekt, Runzelbildung und Haftungsverlust im Beschichtungssystem zu verstehen. Für den Anwender ist aber auch eine entsprechende Langzeitstabilität des Entschäumers in Formulierungen von hoher Bedeutung, da oftmals Produkte wie Farben nicht umgehend, sondern mitunter erst nach längerer Lagerung verbraucht werden. Bei Lagerung unter extremen klimatischen Bedingungen (Hitze und Sonneneinstrahlung) kann mitunter die Wirksamkeit einer Entschäumerformulierung schon nach kurzer Zeit zusammenbrechen.

Dem Stand der Technik gemäße Entschäumer sind zum Beispiel Silikonöle, native Öle, Paraffin- und Mineralöle, aber auch hydrophobe Polyoxyalkylene, langkettige Alkohole sowie Mischungen dieser Produkte untereinander und Emulsionen daraus.

Entschäumer zur Entschäumung wässriger und nichtwässriger Medien, die als die Entschäumung maßgeblich beeinflussenden Wirkstoff Polyoxyalkylen Polysiloxan Polymerisate enthalten, zeigen eine besondere Wirksamkeit und Lagerstabilität. Dazu zählen sowohl die Schauminhibierung, die Entschäumung, die sehr gute Langzeitstabilität, als auch die hervorragende Verträglichkeit in wässrigen und nicht wässrigen Medien. Alle diese Eigenschaften sind für moderne Lackanwendungen von hoher Bedeutung.

Zur Verstärkung der Wirksamkeit werden häufig noch sogenannte hydrophobe Festkörper in Mengen von 0,1 bis 10 Gew.-% zugegeben, die Entnetzungsvorgänge gezielt an Schaumlamellen fördern und somit den Schaumzusammenbruch sehr wirksam unterstützen. Geeignete hydrophobe Festkörper sind entsprechende hydrophobierte oder nicht hydrophobierte Kieselsäuren, hydrophobierte oder nicht hydrophobierte Fällungskieselsäure, Metallcarboxylate wie Metallstearate, Polyolefine und natürliche oder synthetische Wachse wie Paraffinwachse, Polyolefinwachse, Amidwachse und Harnstoff oder Poly(Harnstoffe), wie z.B. in der DE 28 29 906 A1 beschrieben.

Durch Zusatz geeigneter Emulgatoren oder Schutzkolloide können solche Entschäumerformulierungen auch in wässrige Emulsionen überführt werden, die anwendungstechnisch einfacher in Lackformulierungen additiviert werden können. In der CN 101100515 A wird auf ein spezifisches Emulgierverfahren eingegangen, das ebenfalls für die Emulgierung der Polyether Polysiloxan Polymerisate verwendet werden kann.

Es ist ebenfalls bekannt, Polyoxyalkylen Polysiloxan Blockmischpolymerisate als Entschäumungsmittel zu verwenden, s. WO 2009/065644 A1. So ist beispielsweise in der DE 1 012 602 Polyoxyalkylen Polysiloxan Polymerisate beschrieben, die eine A'-B'-A' Struktur aufweisen, wobei mit A' die Polyoxyalkylenblöcke und mit B' ein Polysiloxanblock bezeichnet ist. Diese Aktivstoffe werden der sogenannten SiOC Polyethersiloxan Entschäumer Substanzklasse zugeordnet.

In der DE 24 43 853 werden entschäumendwirkende Zubereitungen beschrieben, die neben linearen auch verzweigte Polyoxyalkylen Polysiloxan Blockcopolymere enthalten.

In der US 4,028,218 ist ein Verfahren zum Verhindern bzw. Zerstören von Schaum in wässrigen Lösungen oder Dispersionen beschrieben, wobei man sich einer ähnlichen Zubereitung, wie sie in der DE 24 43 853 beschrieben ist, bedient. Die Zubereitung unterscheidet sich im Wesentlichen durch einen zusätzlichen Gehalt an organischem Öl, welches ebenfalls entschäumend wirkt. Geeignete organische Öle sind die Ester von Alkoholen und Fettsäuren, wie z.B. pflanzliche oder tierische Öle, oder Mineralöle, Polybutadienöle oder Polypropylenglykole.

Zur Herstellung der wirtschaftlich bedeutsamen Substanzklasse der SiOC-verknüpften Polyethersiloxane, auch als Siliconpolyether oder Polysiloxan Polyether Copolymere bezeichnet, bedient man sich nach heutigem Stand der Technik mehrerer Verfahrensvarianten.

Dem Fachmann ist bekannt, dass es bei diesen SiOC-verknüpften Polyethersiloxanen um eine Produktklasse handelt, die nicht zum Verharzen neigen. Auch wenn SiOC-verknüpfte Polyethersiloxane reaktive Gruppen, wie etwa Hydroxygruppen, enthalten, so werden sie nicht zur gezielten Vernetzung eingesetzt. Sie sind nicht filmbildend im Gegensatz zu Silikonharzen.

Klassischerweise werden SiOC-verknüpfte Polyethersiloxane durch die Reaktion eines Polysiloxans mit einer am Siliciumatom gebundenen Abgangsgruppe (z.B. Halogen) und einem Alkohol oder Polyetherol gebildet. Letzterer wird üblicherweise zuvor durch Alkoxylierung von hydroxyfunktionellen Startverbindungen wie zum Beispiel Methanol, Butanol oder Glykol mit Alkylenoxiden gewonnen. Besonders Chlor als Abgangsgruppe an dem Siliciumatom ist als Ausgangsverbindungen für diesen Reaktionstyp bekannt und weit verbreitet. Chlorsiloxane und Chlorpolysiloxane sind jedoch schwierig zu handhaben, da sie äußerst reaktiv sind. Ihr Einsatz ist weiterhin mit dem Nachteil verbunden, dass der im Verlauf der Reaktion gebildete Chlorwasserstoff korrosionsbeständige Anlagen erfordert und sowohl zu technischen als auch zu ökologischen Herausforderungen führt. Darüber hinaus können in Gegenwart von Chlorpolysiloxanen und Alkoholen bzw. Polyetherolen organische Chlorverbindungen entstehen, die aus toxikologischen Gründen unerwünscht sind, so dass im Herstellungsprozess die Erfordernisse bestanden, diese zu unterdrücken und zu vernichten. Wie dem Fachmann bekannt ist es weiterhin erforderlich, bei der Reaktion eines Chlorsiloxans mit einem Alkohol oder Polyetherolen einen quantitativen Umsatz zu erreichen und zu sichern, so dass die OH-funktionelle Komponente oft in einem stöchiometrischen Überschuss bezogen auf die Chlor Abgangsgruppe der Polysiloxankomponente eingesetzt werden muss. Die Verwendung eines Polyetherüberschusses bedeutet in der Praxis, dass in den so hergestellten Polyethersiloxanen unvermeidbar größere Mengen an unreagierten Überschusspolyethern enthalten sind, die die Konzentration der wirksamen Polyethersiloxan Komponente herabsetzen und die anwendungstechnischen Eigenschaften der Polyethersiloxane beeinträchtigen. Häufig müssen zusätzlich beim oben beschriebenen Verfahren HCl-Fänger eingesetzt werden, um entsprechende quantitative Umsätze zu erzielen. Durch Einsatz HCl-Fänger entstehen große Salzmengen, deren Entfernung im industriellen Maßstab Schwierigkeiten verursachen.

Als Alternative zu diesem Verfahren bietet sich an, Alkohole oder Polyetherole mit Wasserstoffsiloxanen umzusetzen, in denen Wasserstoff direkt am Silicium gebunden ist. Unter geeigneten Bedingungen kommt es hier bei Ausbildung der SiOC-Bindung lediglich zur Abspaltung von Wasserstoff. Dieses Verfahren, bekannt als dehydrogenative Kondensation, ist ausschließlich nur in Anwesenheit eines Katalysators durchführbar. US 5,147,965 verweist auf ein Verfahren, das in der japanischen Patentveröffentlichung JPS 4819941 beschrieben wird, bei dem ein Wasserstoffsiloxan mit einem Alkohol unter Zugabe von Alkalimetallhydroxiden oder Alkalimetallalkoxiden umgesetzt wird. Nachteilig an diesem Verfahren ist, dass die Katalysatoren nach beendeter Reaktion neutralisiert werden müssen und die dabei entstehende Salzfracht zwar deutlich geringer als die des Chlorsiloxanverfahrens ist, aber dennoch erfordert aufwändig abfiltriert werden muss.

EP 0 475 440 beschreibt ein Verfahren, bei dem Wasserstoffsiloxane mit einem Alkohol unter Zugabe einer organischen Säure in Gegenwart eines Pt-Salzes umgesetzt werden. Für die Reaktion ist es unabdingbar, dass sowohl große Mengen an organischer Säure (0,1 bis 1 mol bezogen auf Alkohol), Toluol als Lösungsmittel und ein Platinsalz eingesetzt werden. Da sowohl Toluol als auch Säure im Endprodukt unerwünscht sind, müssen diese nach Reaktionsende wiederum entfernt werden. Platinsalze sind zudem nicht nur teuer, sondern aus physiologischer Sicht auch nicht unbedenklich. Gerade im Bereich der kosmetischen Industrie gibt es den Wunsch nach Platinfreien Produkten.

Ohne den Einsatz von Schwermetallen kommt das in J. Boyer, R. J. P. Corriu, R. Perz, C. Reye, J. Organomet. Chem. 1978, 157, 153-162 beschriebene Verfahren aus. Dabei werden Salze wie z.B. Kaliumtartrat, -phthalat oder -formiat als heterogene Katalysatoren eingesetzt. Die Umsetzungen erfordern allerdings den äquimolaren Einsatz der Salze bezogen auf die SiH-Einheiten und gelingen nur bei hohen Temperaturen von ca. 180 °C. Sowohl die drastischen Bedingungen als auch die notwendigen großen Salzmengen machen dieses Verfahren für den technischen und industriellen Maßstab unattraktiv.

In den Patentanmeldungen DE 10 312 636 und DE 10 359 764 werden borhaltige Katalysatoren für die dehydrogenative Kondensation von Wasserstoffsiloxanen und Alkoholen eingesetzt. So attraktiv diese dehydrogenativen Verfahren zur SiOC-Verknüpfung gerade in Bezug auf die Vermeidung flüssiger und/ oder fester Nebenprodukte auch sind, so stehen sowohl der Einsatz kostspielige und toxische Katalysatoren, wie zum Beispiel Tris(pentafluorophenyl)-boran, als auch die sichere Handhabung des bei der Synthese entstehenden Wasserstoffgases einer breiten Anwendung der Technologie im industriellen Maßstab entgegen.

Der vorliegenden Erfindung liegt deshalb die Aufgabe zugrunde, geeignete verzweigte SiOC-verknüpfte Polyethersiloxane bereitzustellen, die gute entschäumende Eigenschaft zeigen und den Lufteintrag im Lack stark unterdrücken oder sogar vollständig vermeiden, gleichzeitig aber keine Benetzungsstörungen beim Auftragen auf eine Oberfläche verursachen und darüber hinaus eine verbesserte Lagerstabilität aufweisen.

Diese der Erfindung zugrunde liegende Aufgabe kann überraschenderweise gelöst werden, wenn verzweigte SiOC-verknüpfte Polyethersiloxane gemäß folgender idealisierter Formel (I) 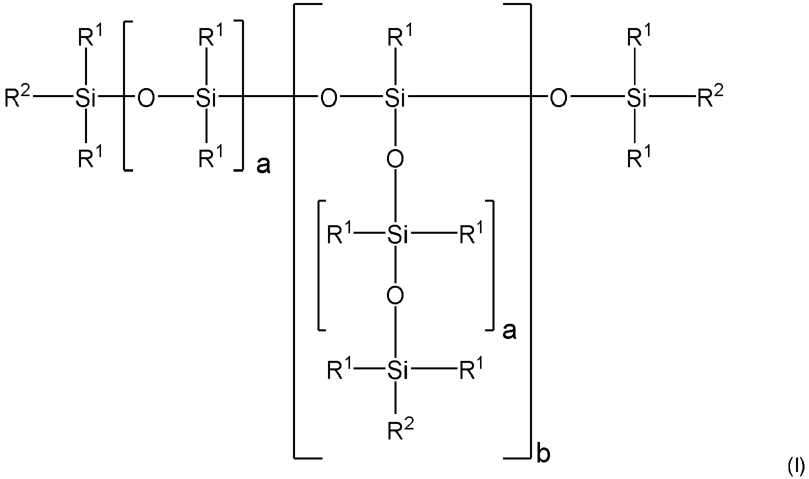 wobei
R¹ ein Alkylrest mit 1 bis 4 Kohlenstoffatomen oder ein Phenylrest ist, jedoch bevorzugt 90% der Reste R¹ Methylreste sind und dass
b einen Wert von 1 bis 10 hat,
a einen Wert von 1 bis 200, bevorzugt 10 bis 100 hat,
einen Wert von 3 bis 70 hat, wenn b ≥ 1 und ≤ 4 ist, oder
einen Wert von 3 bis 30 hat, wenn b > 4 ist und
R² gleich oder verschiedene Polyetherreste bedeutet, allerdings mindestens ein Rest R² ein Strukturelementrest gemäß Formel (II): 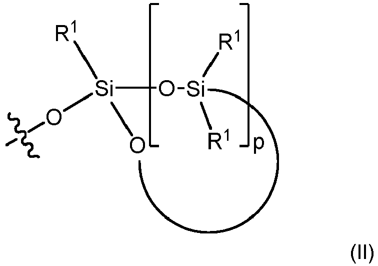
mit p = mindestens 2, bevorzugt p = 2 - 6, besonders bevorzugt p = 3, ist,
verwendet werden.

Die hier wiedergegebenen Indexzahlen und die Wertbereiche der angegebenen Indizes können als Mittelwerte (Gewichtsmittel) der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (II).

Die mit a und b bezeichneten Einheiten können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Vorzugsweise ist der Molprozent der Strukturelementreste gemäß Formel (II) bezogen auf die Gesamtheit aller Si-Atome kleiner als der Molprozent der Polyetherreste bezogen auf die Gesamtheit aller Si-Atome.

Vorzugsweise beträgt das Molverhältnis von Polyetherresten zum Molverhältnis von Strukturelementresten gemäß Formel (II) mindestens 1 : 0,9, bevorzugt mindestens 1 : 0,5 , besonders bevorzugt mindestens 1 : 0,2.

Die Erfinder haben festgestellt, dass die erfindungsgemäßen verzweigten SiOC-verknüpften Polyethersiloxane durch einen charakteristischen Strukturelementrest gemäß Formel (II) gekennzeichnet werden. Evidenz für die Präsenz dieses besonderen Strukturelementrestes gemäß Formel (II) geben die ²⁹Si-NMR-Spektren, die man der T-Einheit (B) im Bereich von - 60 ppm bis - 70 ppm zuordnen kann.

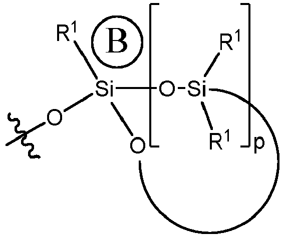

Im Silikongerüst des erfindungsgemäßen verzweigten SiOC-verknüpften Polyethersiloxans liegt vorzugsweise ein Heptamethylcyclotetrasiloxanylrest vor, mit p = 3 und R¹ = Methylrest, umfassend drei D-Einheiten und eine T-Einheit (B), die mit dem restlichen Silikongerüst verbunden ist, gemäß Formel (IIa)

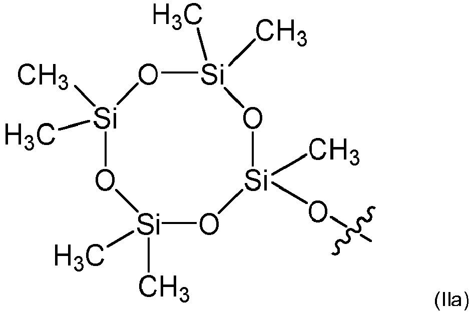

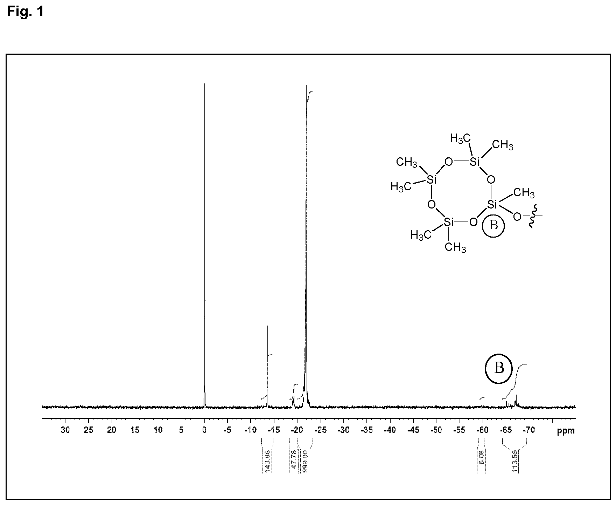

Im ²⁹Si-NMR-Spektrum kann man der T-Einheit (B) bei - 65ppm zuordnen (siehe Fig. 1). Der Strukturelementrest R² = Heptamethylcyclotetrasiloxanylrest (p = 3) kann vorzugsweise somit durch das charakteristische Signal bei -65,0 ppm im ²⁹Si-NMR-Spektrum nachgewiesen werden.

Die Erfinder haben überraschenderweise festgestellt, dass die Präsenz dieses erfindungsgemäß vorhandenen Strukturelementrests positive Effekte hinsichtlich der anwendungstechnischen Eigenschaften des SiOC-basierten Polyethersiloxans zeigt. So stellt man beispielsweise fest, dass die vom erfindungsgemäßen SiOC-Polyethersiloxan abgeleiteten PU-Weichschaumstabilisatoren, Entschäumern, Entlüftern, Emulgatoren, Dismulgatoren und Lack- und Verlaufsadditiven im unmittelbaren Vergleich mit konventionell, nach dem Stand der Technik erzeugten oberflächenaktiven Substanzen ein deutlich ausgewogeneres Bild im Hinblick auf Aktivität wie z.B. Zellöffnung, Entschäumung, Verträglichkeit und Langzeitstabilität zeigen.

Vorzugsweise basiert der Polyetherrest von einem oder mehreren, gleichen oder verschiedenen Polyetherolen der Formel (III)

A[-O-(CH₂-CHR'-O-)ₘ-(CH₂-CH₂-O-)ₙ--(CH₂-CH(CH₃)-O-)ₒ-Z]ₐ (III)

mit
A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-,iso-Propyl-, Butyl-, iso-Butyl-, Vinyl- oder Allylgruppe ist,
R' unabhängig voneinander eine gesättigte Alkylgruppe mit 2-18 C-Atomen ist oder ein aromatischer Rest, respektive bevorzugt eine Ethylgruppe oder ein Phenylrest,
Z Wasserstoff,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist.

Die hier wiedergegebenen Indexzahlen und die Wertbereiche der angegebenen Indizes können als Mittelwerte (Gewichtsmittel) der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (III).

Die mit m, n und o bezeichneten Einheiten können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Unter dem Rest A werden im Rahmen der vorliegenden Erfindung vorzugsweise Reste von Substanzen verstanden, die den Anfang der herzustellenden Verbindung der Formeln (III) bilden, die durch die Anlagerung von Alkylenoxiden erhalten wird. Die Startverbindung ist vorzugsweise ausgewählt aus der Gruppe der Alkohole, Polyetherole oder Phenole. Bevorzugt wird als Startverbindung enthaltend die Gruppe A ein ein- oder mehrwertiger Polyetheralkohol und/oder ein- oder mehrwertiger Alkohol, oder deren beliebige Mischungen verwendet. Für den Fall, dass mehrere Startverbindungen A als Gemisch verwendet wurden, kann der Index a auch einer statistischen Verteilung unterliegen.

Als Monomere in der Alkoxylierungsreaktion werden bevorzugt Ethylenoxid, Propylenoxid, Butylenoxid und/oder Styroloxid eingesetzt sowie beliebige Mischungen dieser Epoxide. Die unterschiedlichen Monomere können in reiner Form oder gemischt eingesetzt werden. Auch kann die Dosierung eines weiteren Epoxides zu einem bereits in der Reaktionsmischung vorliegenden Epoxides kontinuierlich über die Zeit erfolgen, so dass ein zunehmender Konzentrationsgradient des kontinuierlich zugegebenen Epoxides entsteht. Die entstehenden Polyoxyalkylene unterliegen damit einer statistischen Verteilung im Endprodukt, wobei Beschränkungen durch die Dosierung bestimmt werden können. Im hier genannten Fall der kontinuierlichen Zugabe eines weiteren Epoxides zu einem bereits in der Reaktionsmischung vorliegenden Epoxides ist dann über die Kettenlänge ein Strukturgradient zu erwarten. Die Zusammenhänge zwischen Dosierung und Produktstruktur sind dem Fachmann bekannt.

Ein weiterer Gegenstand der Erfindung sind PU-Schaumstabilisatoren, Entschäumer, Entlüfter, Emulgatoren, Dismulgatoren, Lack- und Verlaufsadditive enthaltend erfindungsgemäße verzweigte SiOC-verknüpfte Polyethersiloxane der allgemeinen Formel (I).

Auch ein Gegenstand der Erfindung ist die Verwendung der verzweigten SiOC-verknüpften Polyethersiloxanen der allgemeinen Formel (I) zur Herstellung von PU-Schaumstabilisatoren, Entschäumern, Entlüftern, Emulgatoren, Dismulgatoren und Lack- und Verlaufsadditiven.

Die erfindungsgemäßen Entschäumer weisen ein hervorragendes Entschäumungsvermögen gekoppelt mit sehr guter Langzeitstabilität der Entschäumung und einer sehr guten Verträglichkeit in der Beschichtungsformulierung auf und lassen sich bei einer Vielzahl von industriellen Prozessen, wie beispielsweise zur Entschäumung von Kühlschmierstoffen, Polymerdispersionen, Beschichtungen wie Farben, Lacken und Druckfarben, Klebstoffen, im Papierstrich usw., einsetzen.

Ein weiterer Gegenstand der Erfindung ist die Verwendung der verzweigten SiOC-verknüpften Polyethersiloxanen der allgemeinen Formel (I) zur Herstellung von Dieselentschäumern, von Hydrophobierungsmitteln, von Polymerdispersionen, von Klebstoffen oder Dichtstoffen, von Papiertüchern; von Reinigungs- und Pflegeformulierungen für den Haushalt oder für industrielle Anwendungen, insbesondere zur Herstellung von Weichspülmitteln, von kosmetischen, pharmazeutischen und dermatologischen Zusammensetzungen, insbesondere kosmetischen Reinigungs- und Pflegeformulierungen, Haarbehandlungsmitteln und Haarnachbehandlungsmitteln; von Baustoffzusammensetzungen, von thermoplastischen Formkörpern.

Auch die Verwendung der verzweigten SiOC-verknüpften Polyethersiloxanen der allgemeinen Formel (I) als Prozesshilfsmittel bei der Extrusion von Thermoplasten, als Adjuvant im Pflanzenschutz, als Additiv zur Reinigung und Pflege von harten Oberflächen, zur Oberflächenbehandlung von Fasern, Partikeln oder Flächengebilden, insbesondere zur Ausrüstung oder Imprägnierung von Textilien, oder bei der Beschichtung von Füllstoffen.

Vorzugsweise können sie den zur Schaumbildung neigenden Formulierungen in einer Menge von 0,001 Gew.-% bis 3 Gew.-% bezogen auf die Gesamtflüssigkeit direkt oder in emulgierter Form, vorzugsweise aber als wässrige Emulsion, zugesetzt werden. Bei Zugabe in reiner, nicht vordispergierter Form ist auf eine adäquate Einarbeitung zu achten.

Die erfindungsgemäßen verzweigten SiOC-verknüpften Polyethersiloxane werden vorzugsweise durch Umsetzung von Polyetherolen gemäß der Formel (III) mit supersauren, äquilibrierten Acetoxygruppentragenden, verzweigten Polysiloxanen gemäß folgender Formel (IV) 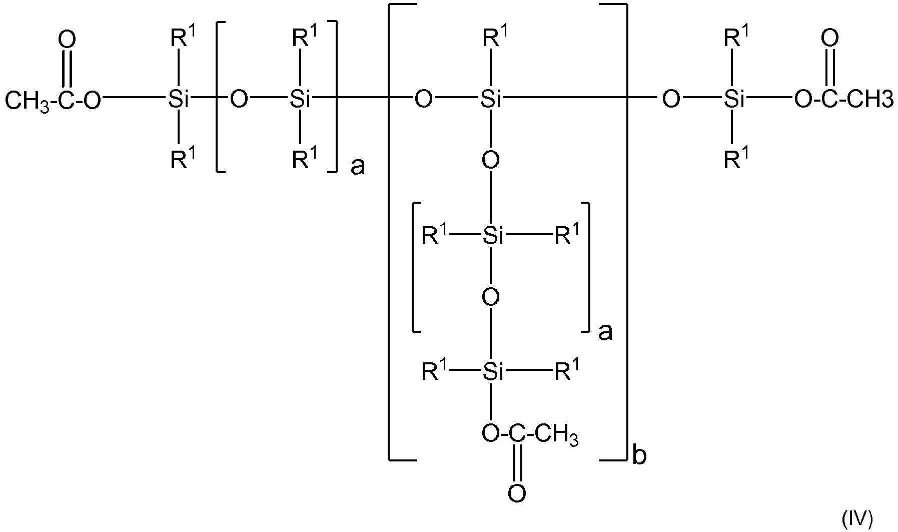 wobei
R¹ ein Alkylrest mit 1 bis 4 Kohlenstoffatomen oder ein Phenylrest ist, jedoch bevorzugt 90% der Reste R¹ Methylreste sind und dass
b einen Wert von 1 bis 10 hat,
a einen Wert von 1 bis 200, bevorzugt 10 bis 100 hat,
einen Wert von 3 bis 70 hat, wenn b ≥ 1 und ≤ 4 ist, oder
einen Wert von 3 bis 30 hat, wenn b > 4 ist und
hergestellt.

Erfindungsgemäß als Polyetherole einsetzbare Verbindungen der Formel (III) und Verfahren zu deren Herstellung werden z. B. in EP 0 075 703, US 3,775,452 und EP 1 031 603 beschrieben. Geeignete Verfahren bedienen sich z.B. basischer Katalysatoren wie z.B. der Alkalihydroxide und der Alkalimethylate. Besonders verbreitet und seit vielen Jahren bekannt ist der Einsatz von KOH. Typischerweise wird ein meist niedermolekularer, dass bedeutet, mit einem Molekulargewicht von kleiner als 200 g/mol, hydroxyfunktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen. Die Verbindungen der Formeln (II) können auch durch Doppelmetallcyanid-Katalyse hergestellt werden. Durch Doppelmetallcyanid-Katalyse hergestellte Polyether haben in der Regel einen besonders niedrigen Gehalt an ungesättigten Endgruppen von kleiner oder gleich 0,02 Milliäquivalenten pro Gramm Polyether-Verbindung (meq/g), bevorzugt kleiner oder gleich 0,015 meq/g, besonders bevorzugt kleiner oder gleich 0,01 meq/g (Bestimmungsmethode ASTM D2849-69 ), enthalten deutlich weniger Monoole und haben in der Regel eine geringe Polydispersität von weniger als 1,5. Die Polydispersität (PD) kann nach einer dem Fachmann an sich bekannten Methode ermittelt werden, indem durch Gelpermeationschromatographie (GPC) sowohl das zahlenmittlere Molekulargewicht (Mn) wie auch das gewichtsmittlere Molekulargewicht (Mw) bestimmt werden. Die Polydispersität ergibt sich als PD = Mw/Mn. Die Herstellung derartiger Polyether wird z. B. in der US-A 5158922 und der EP-A 0654302 beschrieben.

Unabhängig vom Herstellungsweg sind Verbindungen bevorzugt geeignet, die vorzugsweise eine Polydispersität Mw/Mn von 1,0 bis 1,5 aufweisen, bevorzugt mit einer Polydispersität von 1,0 bis 1,3.

Abhängig vom Alkylenoxid-Terminus können die erfindungsgemäß einzusetzenden Polyetherole eine primäre oder sekundäre OH-Funktion besitzen. Unter dem Aspekt der später erzielten hydrolytischen Beständigkeit der gewonnenen SiOC-verknüpften Polyethersiloxane ist im Rahmen der erfinderischen Lehre der Einsatz von solchen Polyetherolen bevorzugt, die eine sekundäre Alkoholfunktion aufweisen.

Als reaktive Ausgangsmaterialien zur Herstellung der erfindungsgemäßen SiOC-basierten Polyethersiloxane werden vorzugsweise Acetoxygruppen-tragende Polysiloxane verzweigten Strukturtyps eingesetzt.

Zugänge zu Acetoxy-funktionellen Polysiloxanen sind in der Literatur beschrieben. Die bisher unveröffentlichten europäischen Patentanmeldungen mit den Anmeldeaktenzeichen EP 18172882.5, EP 18172876.7, EP 17195510.7, EP 17204277.2, EP 18189073.2 und EP 18210035.4 widmen sich der Herstellung von trifluormethansulfonsauren, äquilibrierten Acetoxysiloxanen des verzweigten Strukturtyps.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Der Lehre der EP 18189073.2 beispielsweise folgend werden zyklische Polysiloxane, insbesondere umfassend D₄ und/ oder Ds, und/ oder Mischungen zyklisch-verzweigter Polysiloxane vom D/T-Typ unter Einsatz von Trifluormethansulfonsäure als Katalysator mit Essigsäureanhydrid und unter Zusatz von Essigsäure umgesetzt. Des Weiteren führt die EP 18189073.2 aus, dass sich sowohl Mischungen zyklischer-verzweigter Polysiloxane vom D/T-Typ, die ausschließlich aus D- und T-Einheiten aufweisenden Polysiloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, kleiner 2 Molprozent, bevorzugt kleiner 1 Molprozent ist, und dass sie des Weiteren vorteilhafterweise zumindest 5 Gew.-% Siloxancyclen, wie vorzugsweise Oktamethylcyclotetrasiloxan (D₄), Dekamethylcyclopentasiloxan (Ds) und/oder deren Mischungen enthalten, als auch Mischungen zyklischer-verzweigter, ausschließlich D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind, besonders gut für die Herstellung endäquilibrierter, Acetoxyfunktionen aufweisender Polysiloxane eignen.

Die noch nicht offengelegte Europäische Anmeldeschrift 18210035.4 beschreibt ebenso (i) Reaktionssysteme zur Herstellung Acetoxyfunktionen tragender Polysiloxane, umfassend a) Alkoxygruppen tragende Silane und/oder Polysiloxane und/oder b) Acetoxygruppen tragende Silane und/oder Polysiloxane, c) Hydroxygruppen tragende Silane und/oder Polysiloxane c) gegebenenfalls einfache Polysiloxanzyklen und/oder DT-Zyklen, d) ein Reaktionsmedium, umfassend Essigsäureanhydrid, Perfluoralkansulfonsäure sowie vorzugsweise Essigsäure, (ii) ein Verfahren zur Herstellung linearer oder verzweigter Acetoxyfunktionen tragender Polysiloxane. Gemäß oben bezeichneter Anmeldung ist es beispielsweise möglich, zu einem terminale Acetoxygruppen tragenden, verzweigten Polysiloxan zu gelangen, indem man ein terminale Alkoxygruppen tragendes, verzweigtes Polysilikonäquilibrat ( = Voräquilibrat) als alleinigen Reaktanden mit einem Reaktionsmedium bestehend aus Essigsäureanhydrid, Trifluormethansulfonsäure und Essigsäure zur Umsetzung bringt.

Es ist bevorzugt vorstellbar, neben D- und T-Einheiten aufweisenden Poysiloxanen auch Polysiloxane mit Q-Einheiten einzusetzen, mit der Maßgabe, dass bei diesen Mischungen der Anteil an Si-Atomen stammend aus Q-Einheiten ≤ 10 Massen-% bis ≥ 0 Massenprozent-% ausmacht, bevorzugt ≤ 5 Massen-% bis ≥ 0 Massenprozent-%, wobei die Untergrenze > 0 oder = 0 Massenprozent-% sein kann, insbesondere aber > 0 Massenprozent-% ist, jeweils bezogen auf die Gesamtheit aller Si-Atome.

Die Bereitstellung von Mischungen zyklischer-verzweigter Polysiloxane vom D/T-Typ, die neben D- und T-Einheiten aufweisenden Polysiloxanen auch solche mit Q-Einheiten enthalten, ist dem Fachmann beispielsweise in Analogie zur Lehre der genannten Schriften unter Verwendung von zum Beispiel Q-Einheiten liefernden Kieselsäuresteern (Si(OR)₄) ohne weiteres möglich.

Gemäß einer bevorzugten Ausführungsform der Erfindung setzt man Essigsäure in Mengen von 0,4 bis 3,5 Gewichtsprozent, vorzugsweise 0,5 bis 3 Gewichtsprozent, bevorzugt 0,8 bis 1,8 Gewichtsprozent, besonders bevorzugt in Mengen von 1,0 bis 1,5 Gewichtsprozent bezogen auf die Reaktionsmatrix bestehend aus Essigsäureanhydrid und zyklischen Polysiloxanen, umfassend D₄ und/oder Ds, beziehungsweise bestehend aus Essigsäureanhydrid, und Mischungen zyklisch-verzweigter Polysiloxanen vom D/T-Typ, gegebenenfalls auch mit Q-Einheiten, beziehungsweise bestehend aus zyklischen Polysiloxanen, umfassend D₄ und/oder D₅, und Mischungen zyklisch-verzweigter Polysiloxanen vom D/T-Typ, hinzu.

Der Katalysator Trifluormethansulfonsäure wird gemäß einer bevorzugten Ausführungsform der Erfindung in Mengen von 0,1 bis 1,0 Massenprozent, bevorzugt 0,1 bis 0,3 Massenprozent, bezogen auf die aus Essigsäureanhydrid und zyklischen Polysiloxanen, insbesondere umfassend D₄ und/oder Ds, und/oder zyklischen-verzweigten Polysiloxanen vom D/T-Typ, gegebenenfalls auch mit Q-Einheiten, bestehende Reaktionsmatrix, eingesetzt.

Mit dem Begriff "endäquilibriert" ist gemeint, dass das Äquilibriergleichgewicht erreicht worden, das sich bei einer Temperatur von 23°C und einem Druck von 1013,25 hPa einstellt. Als Indikator für das Erreichen des Äquilibriergleichgewichtes kann der gaschromatographisch bestimmte Gesamtzyklengehalt definiert als die Summe der D₄-, Ds-, D₆-Gehalte bezogen auf die Siloxanmatrix und festgestellt nach der Derivatisierung der α,ω-Diacetoxypolydimethylpolysiloxane zu den entsprechenden α,ω-Diisopropoxypolydimethylpolysiloxanen beziehungsweise nach der Derivatisierung der verzweigten Acetoxypolysiloxane zu den entsprechenden verzweigten Isopropoxysiloxanen herangezogen werden. Der erfindungsgemäße Einsatz der Essigsäure ermöglicht hier die problemlose Unterschreitung sonst üblicher Gleichgewichtsanteile von etwa 8 Gewichtsprozenten des Gesamtcyclengehaltes bei den verzweigten Acetoxypolysiloxanen. Demzufolge entspricht es einer bevorzugten Ausführungsform, wenn des Gesamtzyklengehaltes von kleiner 8, vorzugsweise kleiner 7 Gewichtsprozent bei den verzweigten Acetoxypolysiloxanen unterschritten werden. Die Derivatisierung zu den verzweigten Isopropoxypolysiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxypolydimethylpolysiloxane beziehungsweise der verzweigten Acetoxypolysiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Es ist vorzugsweise vorstellbar, die Acetoxygruppen der supersauren, äquilibrierten Acetoxygruppentragenden, verzweigten Polysiloxanen gemäß Formel (IV) durch geeignete Agentien, wie z. B. Polysiloxanöle, Hexamethyldisiloxane, endzuverschlossen. Somit kann der Austausch der Polysiloxan gebundenen Acetoxygruppen durch die Umsetzung mit Polyetherolen gezielt durchgeführt werden. Die Architektur des SiOC-verknüpften Polyethersiloxans kann dadurch weiter variiert werden.

Vorzugsweise weist das Polyetherol gemäß Formel (III) ausschließlich Wasserstoffatome, Sauerstoffatome und Kohlenstoffatome auf.

Vorzugsweise setzt man bei der Umesterung bzw. der Austausch der Polysiloxan gebundenen Acetoxygruppen durch die Umsetzung mit Polyetherolen mindestens 1 Mol an Polyether gebundene OH-Funktionalität pro Mol Acetoxygruppe des verzweigten Polysiloxans, bevorzugt 1 bis 2 Mol an Polyether gebundene OH-Funktionalität, bevorzugt 1,1 bis 1,6 Mol an Polyether gebundene OH-Funktionalität, besonders bevorzugt 1,2 bis 1,4 Mol an Polyether gebundene OH-Funktionalität pro Mol Acetoxygruppe des verzweigten Poly Polysiloxans ein.

Bevorzugt wird der Austausch der Polysiloxan gebundenen Acetoxygruppen durch die Umsetzung mit Polyetherolen im Temperaturbereich von 40 bis 180°C, bevorzugt zwischen 80 bis 150°C durchgeführt.

Vorzugsweise kann der Austausch der Polysiloxan gebundenen Acetoxygruppen durch die Umsetzung mit Polyetherolen bei vermindertem Druck und/ oder unter Durchleiten eines Inertgases durchgeführt werden.

Bei der Austausch der Polysiloxan gebundenen Acetoxygruppen durch die Umsetzung mit Polyetherolen kann es vorteilhaft sein, dass das Verfahren mindestens in Gegenwart einer Base, insbesondere in Gegenwart von Carbonatsalzen, Ammoniak oder eines organischen Amins erfolgt.

Vorzugsweise wird der Austausch der Polysiloxan gebundenen Acetoxygruppen durch die Umsetzung mit Polyetherolen unter Verwendung eines inerten Lösungsmittels, bevorzugt unter Verwendung eines inerten und zugleich mit entstehender und gegebenenfalls bereits vorhandener Essigsäure Azeotrop bildenden Lösungsmittels erfolgt, wobei das inerte Lösungsmittel vorteilhafterweise ein aromatisches, bevorzugt alkylaromatisches Lösungsmittel, und ganz besonders bevorzugt ausgewählt aus Toluol , Xylol , Ester , Methoxypropylacetat, Ethyl- oder Butylacetat.

Vorteilhaft kann der Austausch der Polysiloxan gebundenen Acetoxygruppen durch die Umsetzung mit Polyetherolen lösemittelfrei erfolgen.

Vorzugsweise erfolgt keine nachträgliche Stabilisierung des nach dem erfindungsgemäßen Verfahren hergestellten SiOC-verknüpften Polyetherpolysiloxans mittels Aminen.

Vorzugsweise weist das nach dem erfindungsgemäßen Verfahren hergestellte SiOC-verknüpfte Polyethersiloxan einen Restgehalt an Octamethylzyklotetrasiloxan, Decamethylzyklopentasiloxan und/oder Dodexamethylzyklohexasiloxan jeweils kleiner als 3 Gew-%, bevorzugt kleiner als 1 Gew.-% und besonders bevorzugt kleiner als 0,1 Gew.-%, bezogen auf das SiOC-verknüpfte Polyethersiloxan, auf.

Nachfolgend werden Beispiele aufgeführt, die dem Fachmann allein zur Erläuterung dieser Erfindung dienen und stellen keinerlei Beschränkung des beanspruchten Gegenstandes dar.

### Methoden

Die **Bestimmung der Wassergehalte** erfolgt grundsätzlich mit der Karl-Fischer-Methode in Anlehnung an den DIN 51777, DGF E-III 10 und DGF C-III 13a Normen. Die ²⁹Si-NMR-Spektroskopie diente in allen Beispielen der Reaktionsverfolgung sowie der strukturellen Absicherung der erfindungsgemäß beanspruchten Copolymerstrukturen.

Die **²⁹Si-NMR-Proben** werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [d(²⁹Si) = 0,0 ppm] gemessen.

Die GPC's **(Gel-Permeations-Chromatographie)** werden unter Verwendung von THF als mobiler Phase an einer Säulenkombination SDV 1000/10000A, Länge 65 cm, ID 0,80 bei einer Temperatur von 30°C an einem SECcurity² GPC System 1260 (PSS Polymer Standards Service GmbH) aufgenommen.

Die **Gaschromatogramme** werden an einem GC-Gerät des Typs GC 7890B der Fa. Agilent Technologies ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.
Als Indikator für das Erreichen des Äquilibriergleichgewichtes wird der gaschromatographisch bestimmte Gesamtzyklengehalt definiert als die Summe der D₄-, D₅-, D₆-Gehalte bezogen auf die Siloxanmatrix und festgestellt nach der Derivatisierung der verzweigten Acetoxygruppen tragenden Siloxane zu den entsprechenden verzweigten, Isopropoxygruppen tragenden Siloxanen herangezogen. Die Derivatisierung zu den den verzweigten, Isopropoxygruppen tragenden Siloxanen wird hierbei bewusst gewählt, um eine unter den Bedingungen der gaschromatographischen Analyse gegebenenfalls erfolgende, thermisch induzierte Rückspaltungsreaktion der verzweigten, Acetoxygruppen tragenden Siloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

### II. SiOC-verknüpfte Polyethersiloxane

### • Herstellung eines erfindungsgemäßen verzweigten, SiOC-verknüpften Polyethersiloxans

### 1a.) Herstellung eines verzweigten, Acetoxygruppentragenden Siloxans

**Beispiel 1:** In einem 500-ml-Vierhalsrundkolben mit KPG-Rührer, Innenthermometer und aufgesetztem Rückflusskühler werden 35,8 g Methyltriethoxysilan (0,201 mol) zusammen mit 166,3 g Dekamethylcyclopentasiloxan (Ds) (0,449 mol) unter Rühren bei 23°C vorgelegt und mit 0,51 g Trifluormethansulfonsäure (0,25 m-% bezogen auf den Ansatz) versetzt und für 4 Stunden bei 60°C äquilibriert.

Anschließend werden 6,8 g Essigsäure hinzugefügt und man rührt weitere 30 Minuten bei 60°C. 55,0 g Essigsäureanhydrid werden innerhalb von 5 Minuten hinzugegeben. Während der Zugabe ist ein Temperaturanstieg auf 100°C zu beobachten und die Reaktionsmischung bleibt nahezu farblos.

Der Rückflusskühler wird dann durch eine Destillationsbrücke ausgetauscht.

Mit weiterem Aufheizen auf 150°C geht im Temperaturbereich zwischen 105°C und 120°C ein Destillat über, dessen zu 50,1 g bestimmt wurde. Die Analytik des Destillats (¹H-NMR und pH-Wertmessung mit Universalindikatorpapier) weist aus, dass es aus Ethylacetat und mitgerissener Essigsäure besteht.

Danach lässt man noch den Reaktionsansatz für 6 Stunden bei 150°C reagieren, und lässt den Reaktionsansatz auf 23°C abkühlen.

Analog wurden weitere erfindungsgemäße verzweigte, Acetoxygruppentragenden Polysiloxane gemäß Tabelle 2 können hergestellt.

Erhalten wird ein nahezu farbloses, klares trifluormethansulfonsaures, verzweigtes, terminale Acetoxyfunktionen tragendes Siloxan, dessen Zielstruktur durch die begleitende ²⁹Si-NMR-Spektroskopie belegt wird.

### Überführung des verzweigten Acetoxysiloxans in das entsprechende verzweigte Isopropoxysiloxan zur analytischen Charakterisierung

Unmittelbar nach der Synthese werden 100,0 g dieses trifluormethansulfonsauren, äquilibrierten verzweigten Acetoxysiloxans des Beispiels 1 in einem 250-ml-Vierhalsrundkolben ausgerüstet mit KPG-Rührer, Innenthermometer und aufgesetztem Rückflusskühler zusammen mit 23,2 g eines über Molekularsieb getrockneten Isopropanols unter Rühren bei 22°C vermischt. Die Reaktionsmischung wird dann durch Einleiten gasförmigen Ammoniaks (NH₃) bis zur alkalischen Reaktion (feuchtes Universalindikatorpapier) beaufschlagt und dann noch 45 Minuten bei dieser Temperatur nachgerührt. Die ausgefallenen Salze werden mit Hilfe eines Faltenfilters abgetrennt.

Isoliert wird eine farblos, klare Flüssigkeit deren begleitendes 29Si-NMR-Spektrum die quantitative Umwandlung des verzweigten Acetoxysiloxans in ein verzweigtes Isopropoxysiloxan belegt.

Ein Aliquot dieses verzweigten Isopropoxysiloxans wird entnommen und gaschromatographisch analysiert. Das Gaschromatogramm weist folgende Gehalte (Tabelle 1, Angaben in Massenprozent) auf:

**Tabelle 1:**

| D₄ | D₅ | D₆ | Summe (D₄ -D₆) | Isopropanolgehalt | Ethylacetatgehalt |
|---|---|---|---|---|---|
| 0,30 % | 1,04 % | 1,88% | 3,22 % | 11,50% | 2,30 % |

Unter Berücksichtigung des Isopropanolüberschusses und des Ethylacetatgehalts sind hierbei die Gehalte an Siloxancyclen (D₄, Ds und D₆) allein bezogen auf den Siloxananteil berechnet.

### 1b.) Austausch der Siloxan gebundenen Acetoxygruppen durch die Umsetzung mit Polyetherolen

In einem 500-ml-Vierhalskolben mit KPG-Rührer, Innenthermometer und aufgesetztem Rückflusskühler werden 76,1 g eines Butanol-gestarteten Polyetherols (Propylenoxid-Anteil von 100%) mit einer Molmasse von 1935 g/ mol (Molmasse bestimmt nach OH-Zahl) in 200 ml Toluol unter Rühren vorgelegt und mit 20 g des in Beispiel 1a.) hergestellten, verzweigten trifluormethansulfonsauren Acetoxysiloxans versetzt.

Analog wurden die Beispiele 2 - 6 mit diesem Polyetherol umgesetzt, siehe Tabelle 2.

Für die Beispiele 7 - 12 wurde ein Butanol-gestartetes Polyetherol mit einem Propylenoxid-Anteil von 90% und einem Ethylenoxid-Anteil von 10% mit einer Molmasse von 1705 g/mol (Molmasse bestimmt nach OH-Zahl) für die Umesterung verwendet. Weitere Angaben können der Tabelle 2 entnommen werden.

Die Reaktionsmischung wird für 30 Minuten unter fortwährendem Rühren auf 50°C erwärmt. Dann wird im Verlauf von weiteren 30 Minuten zunächst die zur Neutralisation benötigte Menge an gasförmigem Ammoniak in die Reaktionsmatrix eingeleitet. Im Verlauf weiterer 45 Minuten leitet man noch einen leichten Ammoniakstrom ein, so dass das Reaktionsgemisch deutlich alkalische Reaktion zeigt (feuchtes Indikatorpapier).

Die ausgefallenen Salze werden über einen Doppelfaltenfilter von der toluolischen Phase abgetrennt.

Am Rotationsverdampfer bei 70°C Sumpftemperatur und einem angelegten Hilfsvakuum von 1 mbar wird das Rohprodukt destillativ von Toluol befreit.

Man isoliert die nahezu farblose Zubereitung eines SiOC-verknüpften verzweigten Polyethersiloxans, dessen angestrebte Struktur durch ein ²⁹Si-NMR-Spektrum abgesichert wird und das zudem das erfindungsgemäß für den Heptamethycyclotetrasiloxanylrest charakteristischen Signal bei - 65 ppm aufweist.

**Tabelle 2**

| **Rohstoffe / Beispiele** | **1** | **2** | **3** | **4** | **5** | **6** | **7** | **8** | **9** | **10** | **11** | **12** |
|---|---|---|---|---|---|---|---|---|---|---|---|---|
| 1a) Herstellung eines verzweigten, Acetoxygruppentragenden Siloxans | | | | | | | | | | | | |
| Methyltriethoxysilan | 35,8 | 35,8 | 35,8 | 35,8 | 35,8 | 35,8 | 35,8 | 35,8 | 35,8 | 35,8 | 35,8 | 35,8 |
| D5 | 166,3 | 151,3 | 180,1 | 166,3 | 151,3 | 180,1 | 166,3 | 151,3 | 180,1 | 166,3 | 151,3 | 180,1 |
| Trifluormethansulfonsäure | 0,5 | 0,5 | 0,5 | 0,5 | 0,5 | 0,5 | 0,5 | 0,5 | 0,5 | 0,5 | 0,5 | 0,5 |
| Essigsäure | 6,8 | 6,8 | 6,8 | 6,8 | 6,8 | 6,8 | 6,8 | 6,8 | 6,8 | 6,8 | 6,8 | 6,8 |
| Essigsäureanhydrid | 55,0 | 55,0 | 55,0 | 60,0 | 60,0 | 60,0 | 55,0 | 55,0 | 55,0 | 60,0 | 60,0 | 60,0 |
| Ethylacetat | 50,1 | 50,1 | 50,1 | 50,1 | 50,1 | 50,1 | 50,1 | 50,1 | 50,1 | 50,1 | 50,1 | 50,1 |

| 1b) Austausch der Siloxan gebundenen Acetoxygruppen durch die Umsetzung mit Polyetherolen | | | | | | | | | | | | |
|---|---|---|---|---|---|---|---|---|---|---|---|---|
| Acetoxy Polysiloxan aus 1a) | 20,0 | 20,0 | 20,0 | 20,0 | 20,0 | 20,0 | 20,0 | 20,0 | 20,0 | 20,0 | 20,0 | 20,0 |
| Polyetherol (Propylenoxid-Anteil von 100%) | 76,1 | 79,6 | 73,1 | 83,3 | 87,3 | 75,8 | | | | | | |
| Polyetherol (Propylenoxid-Anteil von 90% und Ethylenoxid-Anteil von 10%) | | | | | | | 68,1 | 71,3 | 65,4 | 74,5 | 78,1 | 67,8 |

### 2.) Vergleichsbeispiel (VG)

### 2a.) Herstellung eines Chlorpolysiloxans

Die Herstellung der Chlorpolysiloxane erfolgt in an sich bekannter Weise. Bei dieser Reaktion bildet sich ein Gleichgewicht aus den Zyklen und einem chlorfunktionellen Dimethylpolysiloxan. Dieses Reaktionsgemisch bestehend aus 27,2 g Dimethyldichlorsilan, 220 g D4/D5 Zyklengemisch kann sofort für die weitere Umsetzung verwendet werden. Im Falle der Verwendung von Eisen (III)-chlorid als Katalysator ist jedoch eine vorherige Entfernung des Katalysators mit Aktivkohle zu empfehlen, um unerwünschte Verfärbungen durch die Anwesenheit des Eisenkatalysators auszuschließen. Die chemische Charakterisierung erfolgt durch Bestimmung des Säurewertes. Dieser beträgt 1,61 Säureäquivalente pro kg Chlordimethylpolysiloxan.

### 2b.) Umesterung

In einen 1 Liter Vierhalskolben mit Rührer, Thermometer, Destillationsbrücke und Gaseinleitungsrohr werden 533,0 g eines Butanol-gestarteten Polyetherols (Propylenoxid-Anteil von 100%) mit einer Molmasse von 1935 g/ mol (Molmasse bestimmt nach OH-Zahl) vorgelegt. Das Polyetherol wird sodann auf 110°C unter Einleiten von trockenem Stickstoff erhitzt. Nach Erreichen der gewünschten Temperatur wird die Anlage unter Verwendung einer Ölrotationsvakuumpumpe evakuiert und mittels Einleiten von Stickstoff ein Vakuum von ca. 10 mm eingestellt. Nach 1 Stunde beträgt der Wassergehalt des Gemisches <0,02 % und ist somit für die Reaktion mit dem Chlorpolysiloxan vorbereitet. Der Ansatz wird auf 50°C abgekühlt.

In einen bei 100°C vorgetrockneten Tropftrichter mit Gasausgleich, Gaseinleitungsröhrchen und oben aufsitzendem Trockenrohrwerden unter Stickstoffgegenstrom 248,5 g des Chlorpolysiloxans aus 2a) mittels einer Spritze unter inerten Bedingungen eingewogen. Die Destillationsvorrichtung wird nun gegen diesen Tropftrichter ausgetauscht und das Chlorpolysiloxan innerhalb von 30 Minuten zugetropft. Durch Einleiten von Ammoniak wird die Reaktion beschleunigt und es fällt Ammoniumchlorid aus. Nach 1 Stunde wird der Ansatz auf 80°C erhitzt und das Einleiten von Ammoniak so lange fortgesetzt, bis eine Probe auf feuchtem pH-Papier keine Spuren von Säure mehr zeigt. Sodann wird der Tropftrichter wieder gegen die Destillationsbrücke ausgetauscht und durch Anlegen eines Vakuums von ca. 133 Pa der überschüssige, gelöste Ammoniak aus dem Reaktionsgemisch entfernt. Nach dem Abkühlen auf Raumtemperatur wird der Ansatz filtriert. Man erhält ein flüssiges, klares, farbloses Endprodukt mit einer Viskosität bei Raumtemperatur nach Höppler von ca. 420 mPas.

### II. Anwendungstechnische Prüfungen

Für die anwendungstechnische Prüfung wurden die 78,0 Gew.-% Polyethersiloxane mit disperser, hydrophobierter pyrogene Kieselsäure (2,0 Gew.-%) versetzt und unter Verwendung von nichtionogenen Emulgatoren (Mischung aus Polyoxyethylenfettalkoholether und Polyoxyethylentriglycerid mit einem Mischungs-HLB von 13) in eine 20 %ige wässrige Entschäumeremulsion überführt.

Die geprüften Emulsionen (Beispiele 1E - 12E und Vergleichsbeispiel VE) wurden mit den Polyethersiloxanen aus Beispiele 1 - 12 und VG gefertigt.

### IIa.) Prüfung in Papierstreichfarbe

Bei 20°C werden 100 g der Papierstreichfarbe Unilabel T der Fa. SICPA S.A. Germany, 71522 Backnang, welche mit 0,2 Gew.-% Entschäumeremulsion (Beispiele 1E - 12E und Vergleichsbeispiel VE) versetzt wurde, in ein 250 ml Becherglas (6 cm Durchmesser) gegeben und mit einem Turbinenrührer (4 cm Durchmesser) 1 Minute lang bei 2500 UPM gerührt. Mit der gerührten Streichfarbe wird danach sofort ein tarierter Messkolben bis zur Kalibrationsmarke aufgefüllt und durch Wägung das Gewicht bestimmt. Das Gewicht ist abhängig vom Anteil der eingerührten Luft und ist somit ein Maß für die Effektivität des geprüften Antischaummittels. Der Gehalt an Luft kann anhand nachstehender Formel berechnet werden.

Vol. - % Luft = 100 - (g*2)/D
Gewicht von 50 ml gerührter Streichfarbe
D Dichte der luftfreien Streichfarbe

Zur Überprüfung der Verträglichkeit wird die mit Entschäumer versetzte Dispersion auf eine PE-Folie aufgerackelt. Nach dem Trocknen der Beschichtung wird diese dann optisch beurteilt (Tabelle 3).

Die erfindungsgemäßen Entschäumern weisen leichte bis keine Benetzungsstörungen auf. Darüber hinaus sind diese Eigenschaften auch nach Lagerung stabil, was bei konventionellen Entschäumern (VE) nicht der Fall ist.

**Tabelle 3: Beurteilung der anwendungstechnischen Prüfung in Papierstreichfarbe**

| | **2 Stunden nach Einarbeitung des Entschäumers** | | **2 Wochen Lagerung bei RT nach Einarbeitung des Entschäumers** | |
|---|---|---|---|---|
| | Vol - % Luft | Aufzug | Vol - % Luft | Aufzug |
| ohne Entschäumer | 13,5 | Schaumblasen | 13,8 | Schaumblasen |
| Bespiel 1E | 3,2 | keine Benetzungssörungen | 4,3 | keine Benetzungssörungen |
| Bespiel 2E | 3,4 | keine Benetzungssörungen | 3,9 | keine Benetzungssörungen |
| Bespiel 3E | 3,1 | leichte Benetzungssörungen | 3,7 | leichte Benetzungssörungen |
| Bespiel 4E | 3,2 | keine Benetzungssörungen | 4,1 | keine Benetzungssörungen |
| Bespiel 5E | 3,4 | keine Benetzungssörungen | 3,8 | keine Benetzungssörungen |
| Bespiel 6E | 3,1 | leichte Benetzungssörungen | 3,6 | leichte Benetzungssörungen |
| Bespiel 7E | 3,1 | keine Benetzungssörungen | 4,1 | keine Benetzungssörungen |
| Bespiel 8E | 3,4 | nur leichte Benetzungssörungen | 3,9 | nur leichte Benetzungssörungen |
| Bespiel 9E | 3,1 | leichte Benetzungssörungen | 3,8 | leichte Benetzungssörungen |
| Bespiel 10E | 3,1 | keine Benetzungssörungen | 4,2 | keine Benetzungssörungen |
| Bespiel 11 E | 3,3 | nur leichte Benetzungssörungen | 4 | nur leichte Benetzungssörungen |
| Bespiel 12E | 3,1 | leichte Benetzungssörungen | 3,7 | leichte Benetzungssörungen |
| Beispiel VE | 3,1 | schwache Benetzungsstörung | 12,7 | Schaumblasen |

### IIb.) Schaumrollentest und Rührtest

### • Schaumrollentest

Zur Prüfung der entschäumenden Wirkung der erfindungsgemäßen Produkte im Vergleich zu Produkten des Standes der Technik werden ein sogenannter offenporiger Schaumrollentest und ein Rührtest durchgeführt. Bei dem Schaumrollentest werden die zu prüfenden Produkte in eine Hochglanzdispersionsfarbe auf Basis einer Reinacrylatdispersion bzw. in Parkettlacke (1- bzw. 2-komponentig) eingearbeitet. Nach einer Reifezeit von 24 Stunden bei Raumtemperatur werden die in den Farben bzw. Lacken enthaltenen Entschäumeremulsionen auf ihre entschäumende Wirkung geprüft.

Dazu wird 40 g der Farbe (bei Parkettlack 15 g) auf eine lackierte Kontrastkarte (24 cm x 21 cm, schwarz/weiß) gegeben und mit der offenporigen Schaumrolle (bei Parkettlack mit einer Mohairrolle) gleichmässig verteilt. Nach einer Trockenzeit von 24 Stunden bei Raumtemperatur der Farbe bzw. der Lacke wird die Oberfläche des Farbanstriches auf Schaumblasen und Störungen (Benetzungsfehler) optisch beurteilt. Danach werden die Ergebnisse nach einem Notensystem (von 1 für keine Schaumblasen und keine Benetzungsstörungen bis 5 für sehr viele Schaumblasen und sehr viele Benetzungsstörungen (Krater)) eingeteilt.

### • Rührtest

Zusätzlich wird mit dem Lack ein Rührtest durchgeführt. Dieser Rührtest dient auch dazu, um die Produkte auf ihre entschäumende Wirkung zu prüfen. Dazu werden 50 g des Lackes in einen 180 ml PE-Becher eingewogen und bei 3000 U/min, mit einer Dispergierscheibe, d=30 mm, 3 Minuten lang gerührt. Unmittelbar nach Beendigung des Rührtestes werden 45 g des gerührten Lackes in einen Messzylinder geschüttet und das Volumen (plus Schaumhöhe) abgelesen. Je niedriger das Volumen bzw. die Schaumhöhe, desto effektiver der Entschäumer. Danach wird der Lack auf eine Polyesterfolie, welche wiederum an einer schräggestellten Wand befestig ist (25 [deg.] abweichend von der Senkrechten), abgeschüttet. Während und nach der Trocknung des Lackes wird der Film auf Benetzungsstörungen beurteilt. Wie in der oben beschriebenen Beurteilung wird wiederum die Benetzungsstörung und auch der vorhandene Schaum nach Noten 1 bis 5 beurteilt (Tabellen 4 bis 7).

**Tabelle 4: Beurteilung der anwendungstechnischen Prüfung in Hochglanzdispersionsfarben auf Basis Reinacrylat (Acronal DS 6250)**

| | | **Optische Beurteilung der Farboberfläche auf Schaumblasen** | | | | **Optische Beurteilung der Farboberfläche auf Benetzungsstörung** | | |
|---|---|---|---|---|---|---|---|---|
| | Konzentration (Gew.-%) | 24h nach Herstellung der Farbe | nach Wärmelagerung der Farbe 2 Wochen bei 50°C | nach Wärmelagerung der Farbe 4 Wochen bei 50°C | | 24h nach Herstellung der Farbe | nach Wärmelagerung der Farbe 2 Wochen bei 50°C | nach Wärmelagerung der Farbe 4 Wochen bei 50°C |
| Beispiel 1E | 1,00 | 1 | 1 | 1 bis 2 | | 1 | 1 | 1 bis 2 |
| | | keine Schaumblasen | keine Schaumblasen | ganz wenig kleine Krater | | keine Benetzungsstörung | keine Benetzungsstörung | ganz schwache Benetzungsstörung |
| Beispiel 2E | 1,00 | 1 | 1 | 1 bis 2 | | 1 | 1 | 1 bis 2 |
| | | keine Schaumblasen | keine Schaumblasen | ganz wenig kleine Krater | | keine Benetzungsstörung | keine Benetzungsstörung | ganz schwache Benetzungsstörung |
| Beispiel 3E | 1,00 | 1 bis 2 | 2 | 4 | | 1 | 2 | 4 |
| | | ganz wenig kleine Schaumblasen | wenige und kleine Schaumblasen | große und kleine Schaumblasen | | keine Benetzungsstörung | schwache Benetzungsstörung | große und kleine Schaumblasen |
| Beispiel 4E | 1,00 | 1 | 1 | 1 bis 2 | | 1 | 1 | 1 bis 2 |
| | | keine Schaumblasen | keine Schaumblasen | ganz wenig kleine Krater | | keine Benetzungsstörung | keine Benetzungsstörung | ganz schwache Benetzungsstörung |
| Beispiel 5E | 1,00 | 1 | 1 | 1 bis 2 | | 1 | 1 | 1 bis 2 |
| | | keine Schaumblasen | keine Schaumblasen | ganz wenig kleine Krater | | keine Benetzungsstörung | keine Benetzungsstörung | ganz schwache Benetzungsstörung |
| Beispiel 6E | 1,00 | 1 bis 2 | 3 | 4 | | 1 | 2 | 4 |
| | | ganz wenig kleine Schaumblasen | viele große und kleine Schaumblasen | große und kleine Schaumblasen | | keine Benetzungsstörung | schwache Benetzungsstörung | große und kleine Schaumblasen |
| Beispiel 7E | 1,00 | 1 | 1 | 1 bis 2 | | 1 | 1 | 1 bis 2 |
| | | keine Schaumblasen | keine Schaumblasen | ganz wenig kleine Krater | | keine Benetzungsstörung | keine Benetzungsstörung | ganz schwache Benetzungsstörung |
| Beispiel 8E | 1,00 | 1 | 1 | 1 bis 2 | | 1 | 1 | 1 bis 2 |
| | | keine Schaumblasen | keine Schaumblasen | ganz wenig kleine Krater | | keine Benetzungsstörung | keine Benetzungsstörung | ganz schwache Benetzungsstörung |
| Beispiel 9E | 1,00 | 1 bis 2 | 2 | 5 | | 1 | 2 | 5 |
| | | ganz wenig kleine Schaumblasen | wenige und kleine Schaumblasen | viele große und kleine Schaumblasen | | keine Benetzungsstörung | schwache Benetzungsstörung | sehr starke Benetungsstörung |
| Beispiel 10E | 1,00 | 1 | 1 | 1 bis 2 | | 1 | 1 | 1 bis 2 |
| | | keine Schaumblasen | keine Schaumblasen | ganz wenig kleine Krater | | keine Benetzungsstörung | keine Benetzungsstörung | ganz schwache Benetzungsstörung |
| Beispiel 11E | 1,00 | 1 | 1 | 1 bis 2 | | 1 | 1 | 1 bis 2 |
| | | keine Schaumblasen | keine Schaumblasen | ganz wenig kleine Krater | | keine Benetzungsstörung | keine Benetzungsstörung | ganz schwache Benetzungsstörung |
| Beispiel 12E | 1,00 | 1 bis 2 | 3 | 4 | | 1 | 2 | 4 |
| | | ganz wenig kleine Schaumblasen | viele große und kleine Schaumblasen | große und kleine Schaumblasen | | keine Benetzungsstörung | schwache Benetzungsstörung | große und kleine Schaumblasen |
| Beispiel VE | 1,00 | 1 bis 2 | 3 | 5 | | 1 | 2 | 5 |
| | | ganz wenig kleine Schaumblasen | viele große und kleine Schaumblasen | viele große und kleine Schaumblasen | | keine Benetzungsstörung | schwache Benetzungsstörung | sehr starke Benetungsstörung |

**Tabelle 5 Beurteilung der anwendungstechnischen Prüfung in Einkomponenten-Parkettlacken auf Basis Polyurethan/Acrylatdispersion (Alberdingk CUR 99/Primal 3188)**

| | | **Optische Beurteilung der Farboberfläche auf Schaumblasen** | | | | **Optische Beurteilung der Farboberfläche auf Benetzungsstörung** | | |
|---|---|---|---|---|---|---|---|---|
| | Konzentration (Gew.-%) | 24h nach Herstellung der Farbe | nach Wärmelagerung der Farbe 2 Wochen bei 50°C | nach Wärmelagerung der Farbe 4 Wochen bei 50°C | | 24h nach Herstellung der Farbe | nach Wärmelagerung der Farbe 2 Wochen bei 50°C | nach Wärmelagerung der Farbe 4 Wochen bei 50°C |
| Beispiel 1E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 2E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 3E | 1,00 | 1 | 1 | 2 bis 3 | | 1 | 1 | 2 |
| | | keine Schaumblasen | keine Schaumblasen | wenig kleine Krater | | keine Benetzungsstörung | keine Benetzungsstörung | Orangenschalenhaut |
| Beispiel 4E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 5E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 6E | 1,00 | 1 | 1 | 2 bis 3 | | 1 | 1 | 2 |
| | | keine Schaumblasen | keine Schaumblasen | wenig kleine Krater | | keine Benetzungsstörung | keine Benetzungsstörung | Orangenschalenhaut |
| Beispiel 7E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 8E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 9E | 1,00 | 1 | 2 | 2 bis 3 | | 1 | 1 | 3 |
| | | keine Schaumblasen | große und kleine Schaumblasen | wenig kleine Krater | | keine Benetzungsstörung | keine Benetzungsstörung | Benetzungsstörung |
| Beispiel 10E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 11E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 12E | 1,00 | 1 | 2 | 2 bis 3 | | 1 | 1 | 3 |
| | | keine Schaumblasen | große und kleine Schaumblasen | wenig kleine Krater | | keine Benetzungsstörung | keine Benetzungsstörung | Benetzungsstörung |
| Beispiel VE | 1,00 | 1 bis 2 | 2 | 4 | | 1 | 2 | 4 |
| | | ganz wenig kleine Schaumblasen | große und kleine Schaumblasen | viele große und kleine Schaumblasen | | keine Benetzungsstörung | schwache Benetzungsstörung | starke Benetzungsstörung |

**Tabelle 6: Beurteilung der anwendungstechnischen Prüfung in wässrigen Zweikomponenten-Parkettlacken auf Basis Acrylat/Isocyanat (Luhydran N 850 S / Bayhydur 305)**

| | | **Optische Beurteilung der Farboberfläche auf Schaumblasen** | | | | **Optische Beurteilung der Farboberfläche auf Benetzungsstörung** | | |
|---|---|---|---|---|---|---|---|---|
| | Konzentration (Gew.-%) | 24h nach Herstellung der Farbe | nach Wärmelagerung der Farbe 2 Wochen bei 50°C | nach Wärmelagerung der Farbe 4 Wochen bei 50°C | | 24h nach Herstellung der Farbe | nach Wärmelagerung der Farbe 2 Wochen bei 50°C | nach Wärmelagerung der Farbe 4 Wochen bei 50°C |
| Beispiel 1E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 2E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 3E | 1,00 | 1 | 1 | 2 | | 1 | 1 | 2 |
| | | keine Schaumblasen | keine Schaumblasen | wenig kleine Krater | | keine Benetzungsstörung | keine Benetzungsstörung | Benetzungsstörung |
| Beispiel 4E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 5E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Benetzungsstörung |
| Beispiel 6E | 1,00 | 1 | 1 | 2 | | 1 | 1 | 2 |
| | | keine Schaumblasen | keine Schaumblasen | wenig kleine Krater | | keine Benetzungsstörung | keine Benetzungsstörung | Orangenschalenhaut |
| Beispiel 7E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 8E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 9E | 1,00 | 1 | 1 | 2 bis 3 | | 1 | 1 | 3 |
| | | keine Schaumblasen | keine Schaumblasen | wenig kleine Krater | | keine Benetzungsstörung | keine Benetzungsstörung | Benetzungsstörung |
| Beispiel 10E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 11E | 1,00 | 1 | 1 | 1 bis 2 | | 1 | 1 | 2 |
| | | keine Schaumblasen | keine Schaumblasen | ganz wenig kleine Krater | | keine Benetzungsstörung | keine Benetzungsstörung | Orangenschalenhaut |
| Beispiel 12E | 1,00 | 1 | 1 | 2 bis 3 | | 1 | 1 | 3 |
| | | keine Schaumblasen | keine Schaumblasen | wenig kleine Krater | | keine Benetzungsstörung | keine Benetzungsstörung | Benetzungsstörung |
| Beispiel VE | 1,00 | 1 bis 2 | 2 | 4 | | 1 | 2 | 4 |
| | | ganz wenig kleine Schaumblasen | große und kleine Schaumblasen | viele große und kleine Schaumblasen | | keine Benetzungsstörung | schwache Benetzungsstörung | starke Benetzungsstörung |

**Tabelle 7: Beurteilung der anwendungstechnischen Prüfung in wässrigen Zweikomponenten-Parkettlacken auf Basis Acrylat/Isocyanat (Luhydran N 850 S / Bayhydur 305)**

| | | **Entschäumerwirksamkeit nach der Rührtestmethode** | | | | **Optische Beurteilung der Lackoberfläche auf Benetzungsstörung** | | |
|---|---|---|---|---|---|---|---|---|
| | Konzentration (Gew.-%) | 24h nach Herstellung des Lackes | nach Wärmelagerung des Lackes 2 Wochen bei 50°C | nach Wärmelagerung des Lackes 4 Wochen bei 50°C | | 24h nach Herstellung des Lackes | nach Wärmelagerung des Lackes 2 Wochen bei 50°C | nach Wärmelagerung des Lackes 4 Wochen bei 50°C |
| Beispiel 1E | 1,00 | 50 ml/g | 51 ml/g | 53 ml/g | | 1 | 1 | 2 |
| | | | | | | keine Benetzungsstörung | keine Benetzungsstörung | Orangenschalenhaut |
| Beispiel 2E | 1,00 | 50 ml/g | 53 ml/g | 57 ml/g | | 1 | 1 | 2 |
| | | | | | | keine Benetzungsstörung | keine Benetzungsstörung | Orangenschalenhaut |
| Beispiel 3E | 1,00 | 50 ml/g | 51 ml/g | 53 ml/g | | 1 | 1 | 2 |
| | | | | | | keine Benetzungsstörung | keine Benetzungsstörung | Benetzungsstörung |
| Beispiel 4E | 1,00 | 50 ml/g | 51 ml/g | 53 ml/g | | 1 | 1 | 2 |
| | | | | | | keine Benetzungsstörung | keine Benetzungsstörung | Orangenschalenhaut |
| Beispiel 5E | 1,00 | 50 ml/g | 53 ml/g | 57 ml/g | | 1 | 1 | 2 |
| | | | | | | keine Benetzungsstörung | keine Benetzungsstörung | Orangenschalenhaut |
| Beispiel 6E | 1,00 | 50 ml/g | 51 ml/g | 53 ml/g | | 1 | 1 | 2 |
| | | | | | | keine Benetzungsstörung | keine Benetzungsstörung | Benetzungsstörung |
| Beispiel 7E | 1,00 | 50 ml/g | 51 ml/g | 53 ml/g | | 1 | 1 | 2 |
| | | | | | | keine Benetzungsstörung | keine Benetzungsstörung | Orangenschalenhaut |
| Beispiel 8E | 1,00 | 50 ml/g | 53 ml/g | 55 ml/g | | 1 | 1 | 2 |
| | | | | | | keine Benetzungsstörung | keine Benetzungsstörung | Orangenschalenhaut |
| Beispiel 9E | 1,00 | 50 ml/g | 51 ml/g | 53 ml/g | | 1 | 1 | 3 |
| | | | | | | keine Benetzungsstörung | keine Benetzungsstörung | Benetzungsstörung |
| Beispiel 10E | 1,00 | 50 ml/g | 51 ml/g | 53 ml/g | | 1 | 1 | 2 |
| | | | | | | keine Benetzungsstörung | keine Benetzungsstörung | Orangenschalenhaut |
| Beispiel 11E | 1,00 | 50 ml/g | 53 ml/g | 56 ml/g | | 1 | 1 | 2 |
| | | | | | | keine Benetzungsstörung | keine Benetzungsstörung | Orangenschalenhaut |
| Beispiel 12E | 1,00 | 50 ml/g | 51 ml/g | 53 ml/g | | 1 | 1 | 3 |
| | | | | | | keine Benetzungsstörung | keine Benetzungsstörung | Benetzungsstörung |
| Beispiel VE | 1,00 | 51 ml/g | 55 ml/g | 63 ml/g | | 1 | 2 | 4 |
| | | | | | | keine Benetzungsstörung | schwache Benetzungsstörung | starke Benetzungsstörung |

### Verwendete Rezepturen

### Hochglanzdispersionsfarbe auf Basis Reinacrylat (Acronal DS 6250)

Teil 1:

| | |
|---|---|
| Wasser 41 g | |
| Dispex® CX 4320 | 20 g (BASF) |
| Dispex GA40 | 15 g (BASF AG) |
| Parmetol A 26 | 2 g (Schülke und Mayr) |
| ViscoPlus 3030 | 15 g (Evonik) |
| Collacral PU 75, 5%ige | 15 g (BASF) |
| Titandioxid CR 828 | 225 g (Tronox) |

gut dispergieren.
Teil 2:

| | |
|---|---|
| Lusolvan FBH | 15 g (BASF AG) |
| Solvenon DPM | 17 g (Dow Chemical Company) |
| LAPONITE-S 482, 25%ig | 6 g (Byk) |
| Acronal DS 6250 | 570 g (BASF AG) |
| Wasser | 51 g |

Teil 2 vorlegen und Teil 1 unter Rühren zugeben.

### Einkomponenten-Parkettlack auf Basis Polyurethan / Acrylatdispersion (Alberdingk CUR 99/Primal 3188)

Alle Komponenten unter Rühren zusammengeben.

| | |
|---|---|
| Primal 3188 | 506 g (Dow Chemical Company) |
| Alberdingk CUR 99 | 255 g (Alberdingk Boley) |
| Wasser | 78 g |
| Butylglykol | 40 g (Dow Chemical Company) |
| Dowanol DPnB | 12 g (Dow Chemical Company) |
| Acrysol RM 8 | 5 g (Rohm and Hass S.A., 60489 Frankfurt) |
| Aquacer 513 | 40 g (Byk) |
| Wasser | 64 g |

### Wässriger Zweikomponenten-Parkettlack auf Basis Acrylat / Isocyanat (Luhydran N 850 S / Bayhydur 305)

Teil 1:

| | |
|---|---|
| Dowanol DPnB | 40 g (Dow Chemical Company) |
| Propylenglykol | 20 g |
| Deuteron MK | 20 g(Deuteron) |
| Butyldiglykol | 80 g |
| Wasser | 40 g |

gut dispergieren,
Teil 2:

| | |
|---|---|
| Luhydran N 850 S | 1450g (BASF) |
| Poligen WE 1 | 80g (BASF) |
| Wasser | 160g |
| Schwego Pur 8020 | 40 g (Schwegmann GmbH, 53501 Grafschaft Gelsdorf) |

Teil 2 vorlegen und Teil 1 unter Rühren zugeben.

Härterkomponente

| | |
|---|---|
| Bayhydur 305 | 65 g (Bayer MaterialScience AG) |
| Proglyde DMPA | 35 g (Dow Chemical Company) |

## Patentansprüche

1. Verzweigte SiOC-verknüpfte Polyethersiloxane gemäß folgender idealisierter Formel (I) 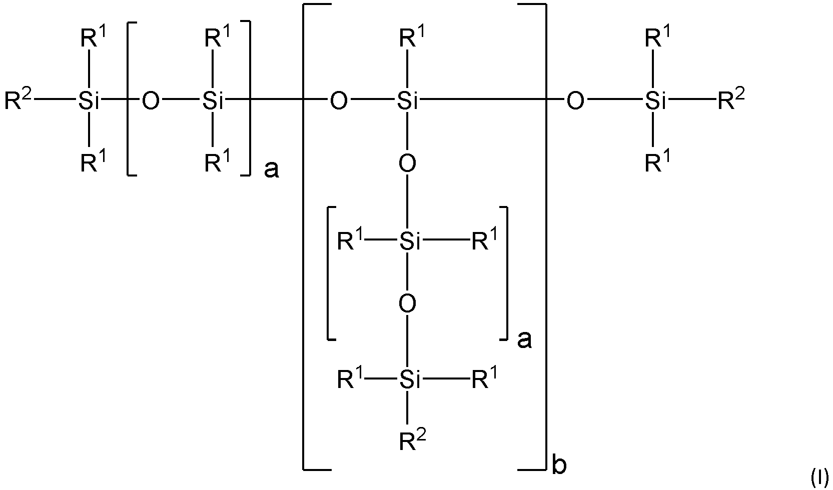 wobei
R¹ ein Alkylrest mit 1 bis 4 Kohlenstoffatomen oder ein Phenylrest ist, jedoch bevorzugt 90% der Reste R¹ Methylreste sind und dass
b einen Wert von 1 bis 10 hat,
a einen Wert von 1 bis 200, bevorzugt 10 bis 100 hat,
einen Wert von 3 bis 70 hat, wenn b ≥ 1 und ≤ 4 ist, oder
einen Wert von 3 bis 30 hat, wenn b > 4 ist und
R² gleich oder verschiedene Polyetherreste bedeutet, allerdings mindestens ein Rest R² ein Strukturelementrest gemäß Formel (II): 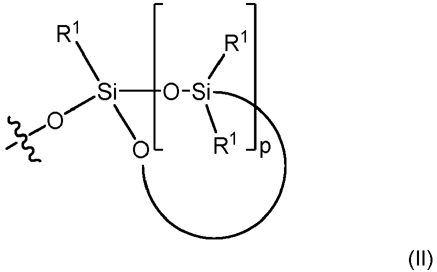
mit p = mindestens 2, bevorzugt p = 2 - 6, besonders bevorzugt p = 3,
ist.

2. Verzweigte SiOC-verknüpfte Polyethersiloxane nach Anspruch 1, **dadurch gekennzeichnet, dass** der Molprozent der Strukturelementreste gemäß Formel (II) bezogen auf die Gesamtheit aller Si-Atome kleiner als der Molprozent der Polyetherreste bezogen auf die Gesamtheit aller Si-Atome ist.

3. Verzweigte SiOC-verknüpfte Polyethersiloxane nach Anspruch 1, **dadurch gekennzeichnet, dass** das Molverhältnis von Polyetherresten zum Molverhältnis von Strukturelementresten gemäß Formel (II) mindestens 1 : 0,9, bevorzugt mindestens 1 : 0,5 , besonders bevorzugt mindestens 1 : 0,2 beträgt.

4. Verzweigte SiOC-verknüpfte Polyethersiloxane nach einem der vorgenannten Ansprüche, **dadurch gekennzeichnet, dass** der Polyetherrest ausgehend von einem oder mehreren, gleichen oder verschiedenen Polyetherolen der Formel (III)
A[-O-(CH₂-CHR'-O-)ₘ-(CH₂-CH₂-O-)ₙ--(CH₂-CH(CH₃)-O-)ₒ-Z]ₐ (III)
mit
A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-, iso-Propyl-, Butyl-,iso-Butyl-, Vinyl- oder Allylgruppe ist,
R' unabhängig voneinander eine gesättigte Alkylgruppe mit 2-18 C-Atomen ist oder ein aromatischer Rest, respektive bevorzugt eine Ethylgruppe oder ein Phenylrest,
Z Wasserstoff,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist,
entspricht.

5. Entschäumer, Entlüfter, PU-Schaumstabilisatoren, Emulgatoren, Dismulgatoren, Lack- und Verlaufsadditive enthaltend verzweigte SiOC-verknüpfte Polyethersiloxane nach einem der Ansprüche 1 -4.

6. Verwendung der verzweigten SiOC-verknüpfte Polyethersiloxanen nach einem der Ansprüche 1 - 4 zur Herstellung von PU-Schaumstabilisatoren, Entschäumern, Entlüftern, Emulgatoren, Dismulgatoren und Lack- und Verlaufsadditiven.

7. Verwendung der verzweigten SiOC-verknüpfte Polyethersiloxanen nach einem der Ansprüche 1 - 4 zur Herstellung von Dieselentschäumern, von Hydrophobierungsmitteln, von Polymerdispersionen, von Klebstoffen oder Dichtstoffen, von Papiertüchern; von Reinigungs- und Pflegeformulierungen für den Haushalt oder für industrielle Anwendungen, insbesondere zur Herstellung von Weichspülmitteln, von kosmetischen, pharmazeutischen und dermatologischen Zusammensetzungen, insbesondere kosmetischen Reinigungs- und Pflegeformulierungen, Haarbehandlungsmitteln und Haarnachbehandlungsmitteln; von Baustoffzusammensetzungen, von thermoplastischen Formkörpern.

8. Verwendung der verzweigten SiOC-verknüpfte Polyethersiloxanen nach einem der Ansprüche 1 - 4 als Prozesshilfsmittel bei der Extrusion von Thermoplasten, als Adjuvant im Pflanzenschutz, als Additiv zur Reinigung und Pflege von harten Oberflächen, zur Oberflächenbehandlung von Fasern, Partikeln oder Flächengebilden, insbesondere zur Ausrüstung oder Imprägnierung von Textilien, oder bei der Beschichtung von Füllstoffen.

9. Verfahren zur Herstellung von verzweigten SiOC-verknüpfte Polyethersiloxanen nach einem der Ansprüche 1 - 5, **dadurch gekennzeichnet, dass** supersaure, äquilibrierte Acetoxygruppen-tragende, verzweigte Polysiloxane gemäß folgender Formel (IV) 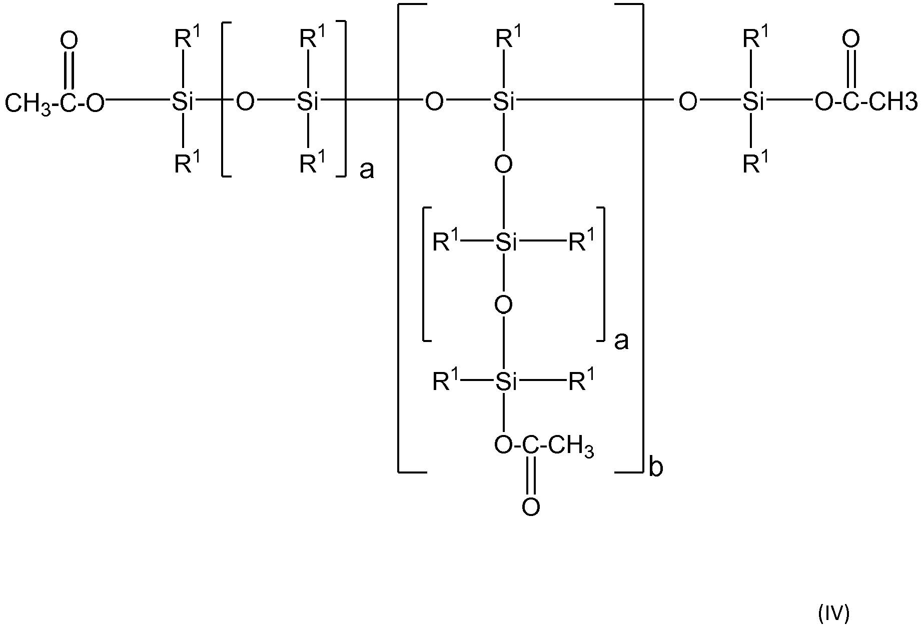 wobei
R¹ ein Alkylrest mit 1 bis 4 Kohlenstoffatomen oder ein Phenylrest ist, jedoch bevorzugt 90% der Reste R¹ Methylreste sind und dass
b einen Wert von 1 bis 10 hat,
a einen Wert von 1 bis 200, bevorzugt 10 bis 100 hat,
einen Wert von 3 bis 70 hat, wenn b ≥ 1 und ≤ 4 ist, oder
einen Wert von 3 bis 30 hat, wenn b > 4 ist und
mit Polyetherolen umgesetzt werden.

10. Verfahren nach Anspruch 9, **dadurch gekennzeichnet, dass** das eingesetzte Polyetherol der Formel (III) entspricht.

11. Verfahren nach Anspruch 9 oder 10, **dadurch gekennzeichnet, dass** das Polyetherol ausschließlich Wasserstoffatome, Sauerstoffatome und Kohlenstoffatome aufweist.

12. Verfahren nach einem der Ansprüche 9 - 11, wobei man mindestens 1 Mol an Polyether gebundene OH-Funktionalität pro Mol Acetoxygruppe des verzweigten Polysiloxans, bevorzugt 1 bis 2 Mol an Polyether gebundene OH-Funktionalität, bevorzugt 1,1 bis 1,6 Mol an Polyether gebundene OH-Funktionalität, besonders bevorzugt 1,2 bis 1,4 Mol an Polyether gebundene OH-Funktionalität pro Mol Acetoxygruppe des verzweigten Siloxans einsetzt.

13. Verfahren nach einem nach einem der Ansprüche 9 - 12, **dadurch gekennzeichnet, dass** der Austausch der Siloxan gebundenen Acetoxygruppen durch die Umsetzung mit Polyetherolen im Temperaturbereich von 40 bis 180°C, bevorzugt zwischen 80°C und 150°C durchgeführt wird.

14. Verfahren nach einem der Ansprüche 9 - 13, **dadurch gekennzeichnet, dass** der Austausch der Siloxan gebundenen Acetoxygruppen durch die Umsetzung mit Polyetherolen bei vermindertem Druck und/oder unter Durchleiten eines Inertgases durchgeführt wird.

15. Verfahren nach einem der Ansprüche 9 - 14, wobei der Austausch der Siloxan gebundenen Acetoxygruppen durch die Umsetzung mit Polyetherolen mindestens in Gegenwart einer Base, insbesondere in Gegenwart von Carbonatsalzen, Ammoniak oder eines organischen Amins erfolgt.

16. Verfahren nach einem der Ansprüche 9 - 15, wobei der Austausch der Siloxan gebundenen Acetoxygruppen durch die Umsetzung mit Polyetherolen unter Verwendung eines inerten Lösungsmittels, bevorzugt unter Verwendung eines inerten und zugleich mit entstehender und gegebenenfalls bereits vorhandener Essigsäure Azeotrop bildenden Lösungsmittels erfolgt, wobei das inerte Lösungsmittel vorteilhafterweise ein aromatisches, bevorzugt alkylaromatisches Lösungsmittel und ganz besonders bevorzugt Toluol ist.

17. Verfahren nach einem der Ansprüche 9 bis 15, wobei der Austausch der Siloxan gebundenen Acetoxygruppen durch die Umsetzung mit Polyetherolen lösemittelfrei erfolgt.

## Claims

1. Branched SiOC-linked polyethersiloxanes of the following idealized formula (I) 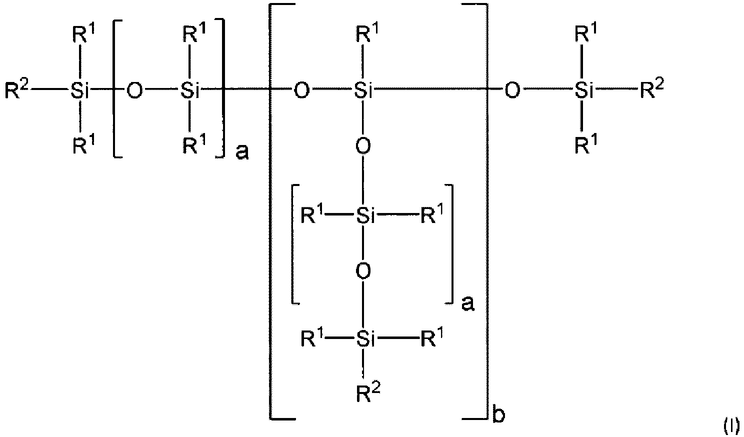 where
R¹ is an alkyl radical having 1 to 4 carbon atoms or a phenyl radical, but preferably 90% of the radicals R¹ are methyl radicals and in that
b has a value of from 1 to 10,
a has a value of from 1 to 200, preferably 10 to 100,
has a value of from 3 to 70 when b is ≥ 1 and ≤ 4, or
has a value of from 3 to 30 when b is > 4, and
R² denotes identical or different polyether radicals, but at least one radical R² is a structural element radical of formula (II): 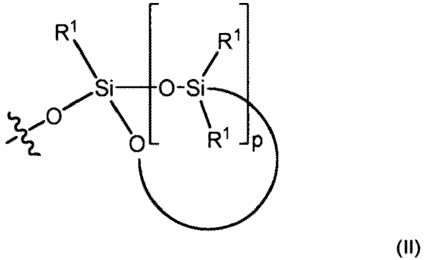 where p = at least 2, preferably p = 2 - 6, particularly preferably p = 3.

2. Branched SiOC-linked polyethersiloxanes according to Claim 1, **characterized in that** the molar percentage of the structural element radicals of formula (II) based on the entirety of all Si atoms is less than the molar percentage of the polyether radicals based on the entirety of Si atoms.

3. Branched SiOC-linked polyethersiloxanes according to Claim 1, **characterized in that** the molar ratio of polyether radicals to the molar ratio of structural element radicals of formula (II) is at least 1:0.9, preferably at least 1:0.5, particularly preferably at least 1:0.2.

4. Branched SiOC-linked polyethersiloxanes according to any of the preceding claims, **characterized in that** the polyether radical corresponds proceeding from one or more identical or different polyetherols of formula (III)
**A[-O-(CH₂-CHR'-O-)ₘ-(CH₂-CH₂-O-)ₙ--(CH₂-CH(CH₃)-O-)ₒ-Z]ₐ** **(III)**
where
A is either hydrogen or a saturated or unsaturated organic radical comprising at least one carbon atom, preferably an organic radical comprising at least one carbon atom of an organic starter compound for preparing the compound, particularly preferably a methyl, ethyl, propyl, isopropyl, butyl, isobutyl, vinyl or allyl group,
R' is independently a saturated alkyl group comprising 2-18 carbon atoms or an aromatic radical, preferably an ethyl group or a phenyl radical respectively,
Z is hydrogen,
m equals from 0 to 50, preferably from 0 to 30, particularly preferably from 0 to 20,
n equals from 0 to 250, preferably from 3 to 220, particularly preferably from 5 to 200,
o equals from 0 to 250, preferably from 3 to 220, particularly preferably from 5 to 200,
a equals from 1 to 8, preferably from greater than 1 to 6, particularly preferably 1, 2, 3 or 4,
with the proviso that the sum total of m, n and o is equal to or greater than 1.

5. Defoamers, deaerating agents, PU foam stabilizers, emulsifiers, demulsifiers, paint and levelling additives containing branched SiOC-linked polyethersiloxanes according to any of Claims 1 - 4.

6. Use of the branched SiOC-linked polyethersiloxanes according to any of Claims 1 - 4 for the production of PU foam stabilizers, defoamers, deaerating agents, emulsifiers, demulsifiers and paint and levelling additives.

7. Use of the branched SiOC-linked polyethersiloxanes according to any of Claims 1 - 4 for the production of diesel defoamers, of hydrophobizing agents, of polymer dispersions, of adhesives or sealants, of paper towels; of cleaning and care formulations for the household or for industrial applications, in particular for the production of fabric softeners, of cosmetic, pharmaceutical and dermatological compositions, in particular cosmetic cleansing and care formulations, hair treatment agents and hair aftertreatment agents; of construction material compositions, of thermoplastic shaped bodies.

8. Use of the branched SiOC-linked polyethersiloxanes according to any of Claims 1 - 4 as processing aid in the extrusion of thermoplastics, as adjuvant in crop protection, as additive for the cleaning and care of hard surfaces, for the surface treatment of fibres, particles or fabrics, in particular for the finishing or impregnation of textiles, or in the coating of fillers.

9. Process for producing branched SiOC-linked polyethersiloxanes according to any of Claims 1 - 5, **characterized in that** superacidic, equilibrated acetoxy group-bearing, branched polysiloxanes of the following formula (IV) 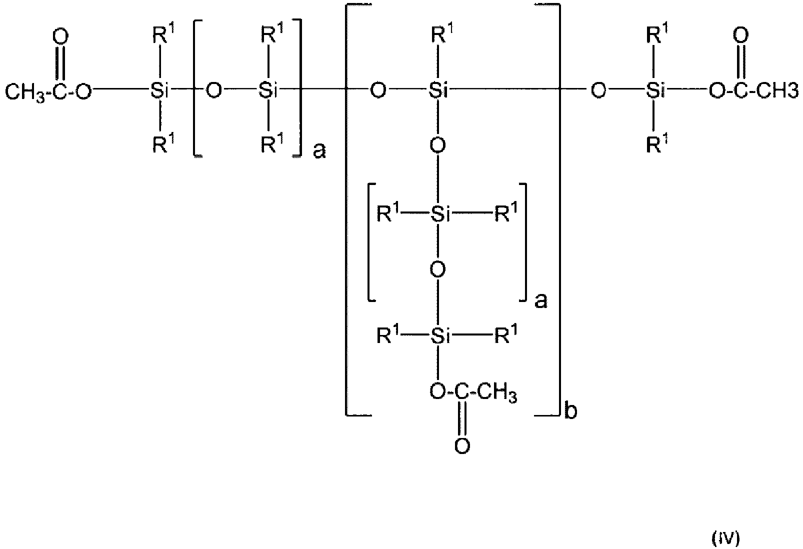 where
R¹ is an alkyl radical having 1 to 4 carbon atoms or a phenyl radical, but preferably 90% of the radicals R¹ are methyl radicals and **in that**
b has a value of from 1 to 10,
a has a value of from 1 to 200, preferably 10 to 100,
has a value of from 3 to 70 when b is ≥ 1 and ≤ 4, or
has a value of from 3 to 30 when b is > 4, and
are reacted with polyetherols.

10. Process according to Claim 9, **characterized in that** the polyetherol used corresponds to formula (III).

11. Process according to Claim 9 or 10, **characterized in that** the polyetherol exclusively comprises hydrogen atoms, oxygen atoms and carbon atoms.

12. Process according to any of Claims 9 - 11, wherein at least 1 mol of polyether-bonded OH functionality is used per mole of acetoxy group of the branched polysiloxane, preferably 1 to 2 mol of polyether-bonded OH functionality, preferably 1.1 to 1.6 mol of polyether-bonded OH functionality, particularly preferably 1.2 to 1.4 mol of polyether-bonded OH functionality per mole of acetoxy group of the branched siloxane.

13. Process according to according to any to any of Claims 9 - 12, **characterized in that** the replacement of the siloxane-bonded acetoxy groups via the reaction with polyetherols is conducted in the temperature range from 40 to 180°C, preferably between 80°C and 150°C.

14. Process according to any of Claims 9 - 13, **characterized in that** the replacement of the siloxane-bonded acetoxy groups via the reaction with polyetherols is conducted at reduced pressure and/or while passing through an inert gas.

15. Process according to any of Claims 9 - 14, wherein the replacement of the siloxane-bonded acetoxy groups via the reaction with polyetherols is effected at least in the presence of a base, in particular in the presence of carbonate salts, ammonia or of an organic amine.

16. Process according to any of Claims 9 - 15, wherein the replacement of the siloxane-bonded acetoxy groups via the reaction with polyetherols is effected using an inert solvent, preferably using an inert solvent which at the same time forms an azeotrope with formed, and possibly already present, acetic acid, wherein the inert solvent is advantageously an aromatic, preferably alkylaromatic solvent and very particularly preferably is toluene.

17. Process according to any of Claims 9 to 15, wherein the replacement of the siloxane-bonded acetoxy groups via the reaction with polyetherols is done without solvent.

## Revendications

1. Polyéthersiloxanes ramifiés reliés par SiOC selon la formule idéalisée suivante (I) 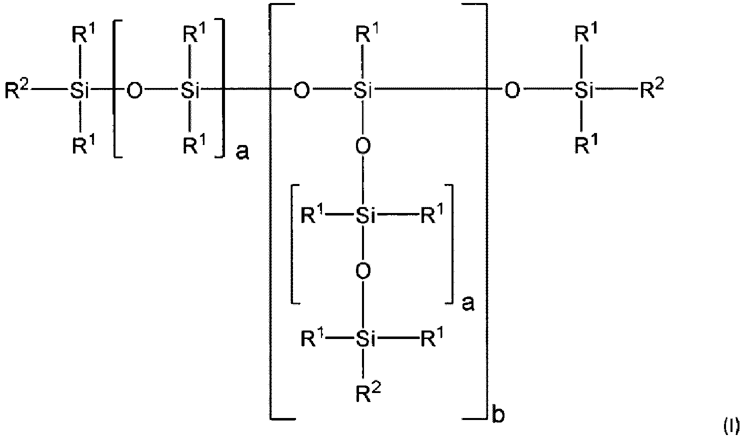
R¹ étant un radical alkyle comportant 1 à 4 atomes de carbone ou un radical phényle, toutefois préférablement 90 % des radicaux R¹ étant des radicaux méthyle et en ce que
b possède une valeur de 1 à 10,
a possède une valeur de 1 à 200, préférablement 10 à 100,
possède une valeur de 3 à 70, lorsque b est ≥ 1 et ≤ 4, ou
possède une valeur de 3 à 30, lorsque b est > 4 et
R² signifiant des radicaux polyéthers identiques ou différents, néanmoins au moins un radical R² étant un radical d'élément de structure selon la formule (II) : 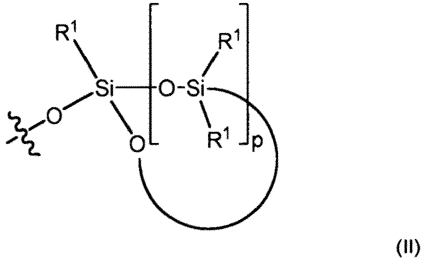 avec p = au moins 2, préférablement p = 2 à 6, particulièrement préférablement p = 3.

2. Polyéthersiloxanes ramifiés reliés par SiOC selon la revendication 1, **caractérisés en ce que** le pourcentage molaire des radicaux d'élément de structure selon la formule (II) par rapport à la totalité de tous les atomes de Si est plus petit que le pourcentage molaire des radicaux polyéther par rapport à la totalité de tous les atomes de Si.

3. Polyéthersiloxanes ramifiés reliés par SiOC selon la revendication 1, **caractérisés en ce que** le rapport molaire de radicaux polyéther sur le rapport molaire de radicaux d'élément de structure selon la formule (II) est d'au moins 1 : 0,9, préférablement d'au moins 1 : 0,5, particulièrement préférablement d'au moins 1 : 0,2.

4. Polyéthersiloxanes ramifiés reliés par SiOC selon l'une quelconque des revendications précédentes, **caractérisés en ce que** le radical polyéther correspond à partir d'un ou plusieurs, polyétherols identiques ou différents de formule (III),
**A[-O-(CH₂-CHR'-O-)ₘ-(CH₂-CH₂-O-)ₙ--(CH₂-CH(CH₃)-O-)ₒ-Z]ₐ** **(III)**
avec
A étant soit hydrogène, soit un radical organique saturé ou insaturé présentant au moins un atome de carbone, préférablement un radical organique présentant au moins un atome de carbone d'un composé organique de départ pour la préparation du composé, particulièrement préférablement un groupe méthyle, éthyle, propyle, isopropyle, butyle, isobutyle, vinyle ou allyle,
R' étant indépendamment les uns des autres un groupe alkyle saturé comportant 2 à 18 atomes de C ou un radical aromatique, respectivement préférablement un groupe éthyle ou un radical phényle,
Z étant hydrogène,
m valant 0 à 50, préférablement 0 à 30, particulièrement préférablement 0 à 20
n valant 0 à 250, préférablement 3 à 220, particulièrement préférablement 5 à 200
o valant 0 à 250, préférablement 3 à 220, particulièrement préférablement 5 à 200
a valant 1 à 8, préférablement étant supérieur à 1 jusqu'à 6, particulièrement préférablement valant 1, 2, 3 ou 4,
à la condition que la somme de m, n et o soit égale ou supérieure à 1.

5. Agents antimousses, désaérateurs, stabilisateurs de mousse de PU, émulsifiants, désémulsifiants, additifs de laque et d'écoulement contenant des polyéthersiloxanes ramifiés reliés par SiOC selon l'une quelconque des revendications 1 à 4.

6. Utilisation des polyéthersiloxanes ramifiés reliés par SiOC selon l'une quelconque des revendications 1 à 4 pour la préparation de stabilisateurs de mousse de PU, d'agents antimousses, de désaérateurs, d'émulsifiants, de désémulsifiants et d'additifs de laque et d'écoulement.

7. Utilisation des polyéthersiloxanes ramifiés reliés par SiOC selon l'une quelconque des revendications 1 à 4 pour la préparation d'agents antimousses de diesel, d'agents d'hydrophobisation, de dispersions de polymère, d'adhésifs ou d'agents d'étanchéité, de mouchoirs en papier ; de formulations de nettoyage et d'entretien pour usage domestique ou pour des applications industrielles, en particulier pour la préparation d'agents adoucissants, de compositions cosmétiques, pharmaceutiques et dermatologiques, en particulier de formulations de nettoyage et d'entretien cosmétiques, d'agents de traitement capillaire et d'agents de post-traitement capillaire ; de compositions de matériaux de construction, de corps moulés thermoplastiques.

8. Utilisation des polyéthersiloxanes ramifiés reliés par SiOC selon l'une quelconque des revendications 1 à 4 en tant qu'auxiliaires de procédé lors de l'extrusion de thermoplastiques, en tant qu'adjuvant phytosanitaire, en tant qu'additif pour le nettoyage et l'entretien de surfaces dures, pour le traitement en surface de fibres, de particules ou de structures planes, en particulier pour l'apprêtement ou l'imprégnation de textiles, ou lors du revêtement de charges.

9. Procédé pour la préparation de polyéthersiloxanes ramifiés reliés par SiOC selon l'une quelconque des revendications 1 à 5, **caractérisé en ce que** des polysiloxanes ramifiés, portant des groupes acétoxy superacides, équilibrés selon la formule suivante (IV) 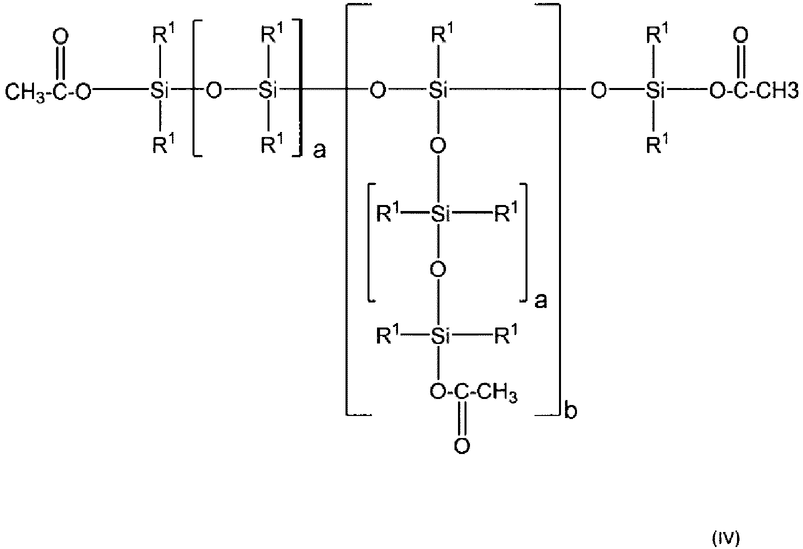
R¹ étant un radical alkyle comportant 1 à 4 atomes de carbone ou un radical phényle, toutefois préférablement 90 % des radicaux R¹ étant des radicaux méthyle et **en ce que**
b possède une valeur de 1 à 10,
a possède une valeur de 1 à 200, préférablement 10 à 100,
possède une valeur de 3 à 70, lorsque b est ≥ 1 et ≤ 4, ou
possède une valeur de 3 à 30, lorsque b est > 4 et étant transformés avec des polyétherols.

10. Procédé selon la revendication 9, **caractérisé en ce que** le polyétherol utilisé correspond à la formule (III).

11. Procédé selon la revendication 9 ou 10, **caractérisé en ce que** le polyétherol présente exclusivement des atomes d'hydrogène, des atomes d'oxygène et des atomes de carbone.

12. Procédé selon l'une quelconque des revendications 9 à 11, dans lequel on utilise au moins 1 mole de fonctionnalité OH liée au polyéther par mole de groupe acétoxy du polysiloxane ramifié, préférablement 1 à 2 moles de fonctionnalité OH liée au polyéther, préférablement 1,1 à 1,6 mole de fonctionnalité OH liée au polyéther, particulièrement préférablement 1,2 à 1,4 mole de fonctionnalité OH liée au polyéther par mole de groupe acétoxy du siloxane ramifié.

13. Procédé selon selon l'une quelconque des revendications 9 à 12, **caractérisé en ce que** l'échange des groupes acétoxy liés au siloxane est mis en œuvre par la transformation avec des polyétherols dans une plage de températures de 40 à 180 °C, préférablement entre 80 °C et 150 °C.

14. Procédé selon l'une quelconque des revendications 9 à 13, **caractérisé en ce que** l'échange des groupes acétoxy liés au siloxane est mis en œuvre par la transformation avec des polyétherols sous pression réduite et/ou par passage d'un gaz inerte.

15. Procédé selon l'une quelconque des revendications 9 à 14, l'échange des groupes acétoxy liés au siloxane étant réalisé par la transformation avec des polyétherols au moins en présence d'une base, en particulier en présence de sels de carbonate, d'ammoniac ou d'une amine organique.

16. Procédé selon l'une quelconque des revendications 9 à 15, l'échange des groupes acétoxy liés au siloxane étant réalisé par la transformation avec des polyétherols avec utilisation d'un solvant inerte, préférablement avec utilisation d'un solvant inerte et en même temps formant un azéotrope avec de l'acide acétique produit et éventuellement déjà présent, le solvant inerte étant avantageusement un solvant aromatique, préférablement alkylaromatique et tout particulièrement préférablement le toluène.

17. Procédé selon l'une quelconque des revendications 9 à 15, l'échange des groupes acétoxy liés au siloxane étant réalisé par la transformation avec des polyétherols sans solvant.
